(19) Europäisches Patentamt
European Patent Office
Office européen des brevets

(11) EP 1 719 790 A1

(12) # EUROPEAN PATENT APPLICATION
published in accordance with Art. 158(3) EPC

(43) Date of publication:
**08.11.2006 Bulletin 2006/45**

(21) Application number: **05709847.7**

(22) Date of filing: **08.02.2005**

(51) Int Cl.:
*C08G 63/87 (2006.01)*

(86) International application number:
**PCT/JP2005/001795**

(87) International publication number:
**WO 2005/075539 (18.08.2005 Gazette 2005/33)**

(84) Designated Contracting States:
**AT BE BG CH CY CZ DE DK EE ES FI FR GB GR HU IE IS IT LI LT LU MC NL PL PT RO SE SI SK TR**

(30) Priority: **10.02.2004 JP 2004033132**
**26.03.2004 JP 2004092308**
**26.03.2004 JP 2004092309**

(71) Applicant: **Toyo Boseki Kabushiki Kaisha**
**Osaka-shi,**
**Osaka 530-8230 (JP)**

(72) Inventors:
- **KAGEYAMA, Katsuhiko, TOYO BOSEKI K.K. TURUGA CTR. Tsuruga-shi Fukui 9148550 (JP)**
- **FUNAKI, Kenichi, TOYO BOSEKI K.K. TURUGA CENTER Ohtsu-shi Shiga 5200292 (JP)**
- **FUCHIKAMI, Masaki, TOYO BOSEKI K.K. TURUGA CTR. Tsuruga-shi Fukui 9148550 (JP)**
- **NAKAGAWA, Satoru, TOYO BOSEKI K.K. TURUGA CTR. Tsuruga-shi Fukul 9148550 (JP)**
- **KATAYOSE, Kazuo, TOYO BOSEKI K.K. TURUGA CENTER Tsuruga-shi Fukui 9148550 (JP)**
- **NAKAJIMA, Takahiro, TOYO BOSEKI K.K. RESCH. CENTER Ohtsu-shi Shiga 5200292 (JP)**
- **WATANABE, Naoki, TOYO BOSEKI K.K. RESEARCH CENTER Ohtsu-shi Shiga 5200292 (JP)**
- **YOSHIDA, Fumikazu, TOYO BOSEKI K.K. RESEARCH CTR. Ohtsu-shi Shiga 5200292 (JP)**
- **ATSUCHI, Tetsumori, TOYO BOSEKI K.K. RESEARCH CTR. Ohtsu-shi SHIGA 5200292 (JP)**
- **GYOBU, Shoichi, TOYO BOSEKI K.K. TURUGA CENTER Tsuruga-shi Fukui 9148550 (JP)**
- **MATSUMOTO, Haruo, TOYO BOSEKI K.K. TURUGA CENTER Tsuruga-shi Fukui 9148550 (JP)**
- **MURASHIGE, Ryuichi, TOYO BOSEKI K.K. TURUGA CTR. Tsuruga-shi Fukui 9148550 (JP)**
- **MARUYAMA, Gaku, TOYO BOSEKI K.K. TURUGA CENTER Tsuruga-shi Fukui 9148550 (JP)**
- **AKITOMO, Yoshiko, TOYO BOSEKI K.K. RESEARCH CENTER Ohtsu-shi Shiga 5200292 (JP)**
- **SHIMIZU, Hideki, TOYO BOSEKI K.K. TURUGA CENTER Tsuruga-shi, Fukui 914-8550 (JP)**

(74) Representative: **Vossius & Partner**
**Siebertstrasse 4**
**81675 München (DE)**

(54) **POLYESTER POLYMERIZATION CATALYST, POLYESTER PRODUCED THEREWITH AND PROCESS FOR PRODUCING THE POLYESTER**

(57) The invention provides a polyester produced in the presence of a polycondensation catalyst comprising at least one compound selected from a group consisting of aluminum compounds and at least one compound selected from a group consisting of phosphorus compounds and being excellent in color tone, thermal stability, and transparency and improved in terms of insoluble particles. Particularly, the invention provides a polyester in which the content of an aluminum containing insoluble particles in the polyester is 3500 ppm or lower and a polyester which has a haze value of 2% or lower when being formed into a monoaxially oriented film. The aluminum catalyst for attaining these characteristics and properties may be polyester polymerization catalyst obtained by mixing an aluminum compound and a phosphorus compound in a solvent and has specified spectral characteristics in the side measurement of $^{31}$P-NMR spectrum and $^{27}$Al-NMR spectrum.

EP 1 719 790 A1

## Description

FIELD OF THE INVENTION

The invention relates to a polyester polymerization catalyst, a polyester produced by using the catalyst, and a process for producing the polyester and more particularly, a polyester polymerization catalyst excellent in catalytic activity and capable of providing a polyester with excellent color tone, thermal stability, and transparency and improved in terms of insoluble particles, a polyester produced by using the catalyst, and a process for producing the polyester.

BACKGROUND ART

Polyesters represented by polyethylene terephthalate (PET), polybutylene terephthalate (PBT), and polyethylene naphthalate (PEN) and the like are excellent in mechanical properties and chemical properties and have been used in a wide range of fields, for example, as fibers for clothes and industrial materials; films and sheets for wrapping and magnetic tapes; bottles, which are hollow molded articles; casing for electric and electronic parts; and other engineering plastic molded articles and the like, corresponding to the characteristics of the respective polyesters. Particularly, since bottles made of saturated polyesters such as polyethylene terephthalate are excellent in the mechanical strength, heat resistance, transparency, and gas barrier property, they are used widely as containers for containing beverages such as juices, carbonated beverages, and soft drinks and the like and containers for eye lotions and cosmetics and the like.

With respect to polyesters comprising an aromatic dicarboxylic acid and an alkylene glycol as main constitutional components as representative polyesters, for example in the case of a polyethylene terephthalate (PET), esterification reaction or transesterification reaction of terephthalic acid or dimethyl terephthalate with ethylene glycol is carried out for producing an oligomer mixture such as bis(2-hydroxyethyl) terephthalate and the like; and the mixture is subjected to liquid-phase condensation polymerization by a catalyst at a high temperature in vacuum and successively to granulation, and then to solid-phase polycondensation for producing pellets for molding. The polyester pellets obtained as described are injection molded to produce a preform and the preform is blow molded for biaxial drawing and molded into a bottle-like shape.

Conventionally, as a polyester polycondensation catalyst to be used for polycondensation of such polyesters has widely been used an antimony or germanium compound. Antimony trioxide is an economical catalyst having excellent catalytic activity, but if it is used as a main component, that is, in proper addition amount to exhibit practically applicable polymerization speed, since metal antimony precipitates in polycondensation, gray discoloration and insoluble particles are formed in polyesters and it causes surface defects of films. In the case it is used as a starting material for hollow molded articles, it becomes difficult to obtain hollow molded articles excellent in transparency. Because of these reasons, a polyester containing no antimony compound or a polyester not containing any antimony compound as catalyst main components is desired.

As a catalyst for providing polyesters having excellent catalytic activity that is free from the above-mentioned problems, other than antimony has practically been employed a germanium compound, however the catalyst has problems that the catalyst is extremely costly and that the polymerization control becomes difficult since the catalyst is easy to be eluted outside of the reaction system during the polymerization and consequently the catalyst concentration in a reaction system tends to be changed and therefore, it is problematic to use it as a catalyst main component.

It has been investigated to use other polycondensation catalysts in place of the antimony catalysts or germanium catalysts and titanium compounds such as tetraalkoxytitanates have already been proposed, however, there occur problems that the polyesters produced by using them are susceptive of thermal deterioration and also that the polyesters are considerably colorized.

As described above, it has been desired to obtain a polymerization catalyst containing a metal component as a main component other than antimony, germanium, and titanium compounds and excellent in the catalytic activity and capable of producing polyesters excellent in the color tone, thermal stability; and transparency of a molded article and containing less insoluble particles.

An aluminum compound has generally been known to be inferior in the catalytic activity (refer to Patent Document No. 1), however it is disclosed that combination of an aluminum compound and a phosphorus compound as a polycondensation catalyst to meet the above-mentioned requirements improves the polymerization activity and thus the combination use of them has drawn attention (refer to Patent Document Nos. 1 to 4, e.g.).

Patent Document No. 1: JP S46-40711(B)
Patent Document No. 1: JP 2001-131276(A)
Patent Document No. 2: JP 2001-163963(A)
Patent Document No. 3: JP 2001-163964(A)

Patent Document No. 4: JP 2002-220446(A)

Also, it is disclosed that polyesters excellent in thermal stability and having good transparency with little insoluble particles formation can be produced by the above-mentioned polycondensation catalyst system (refer to Patent Document No. 5). Patent Document No. 5: JP 2001-354759(A)
The polyesters obtained by the above-mentioned polycondensation catalyst system are good in color tone, transparency and thermal stability and meet the above-mentioned requirements. However, the polyesters obtained in the above-mentioned method sometimes contain high concentration of insoluble particles in the polyesters depending on the production manufacturers of an aluminum compound, which is a constitutional component of the polycondensation catalyst, difference in the production lots, or the production condition of the polyester, and accordingly, there are problems that it is impossible to stably obtain polyesters with a low concentration of such insoluble particles and that ultrafine fibers, highly transparent films for optical use, or molded bodies with ultra high transparency which are satisfactory for practical use have not been made available, and thus it has been desired to solve such problems.

BRIEF DESCRIPTION OF THE DRAWINGS

Fig. 1 is an $^{27}$Al-MNR spectrum of an ethylene glycol solution of an aluminum compound of Example C-3.

Fig. 2 is an $^{27}$Al-MNR spectrum of an ethylene glycol solution of an aluminum compound of Reference Example C-1.
Fig. 3 is a $^{31}$P-MNR spectrum of a mixed solution of an aluminum compound solution and a phosphorus compound solution of Example C-3.
Fig. 4 is a $^{31}$P-MNR spectrum of a mixed solution of an aluminum compound solution and a phosphorus compound solution of Example C-1.

SUMMARY OF THE INVENTION

Problems to be Solved by the Invention

The purpose of the invention is to provide a polyester polymerization catalyst containing no antimony compound, germanium compound, and titanium compound as catalyst main components, using an aluminum compound as a catalytic metal component, and having excellent catalytic activity for providing the polyester; a polyester produced by using the catalyst exhibiting the characteristics in fields of molded articles and the like excellent in the color tone, thermal stability, and transparency, particularly ultrafine fibers, highly transparent films for optical use, or molded bodies with ultra high transparency; and process for producing a polyester.

Means for Solving the Problems

The inventors of the invention have made various investigations to solve the above-mentioned problems and accordingly have found that the following inventions can solve the problems.
That is,

(1) a polyester produced in the presence of a polycondensation catalyst containing at least one compound selected from a group consisting of aluminum compounds and at least one compound selected from a group consisting of phosphorus compounds, in which an aluminum containing insoluble particles is 3500 ppm or lower:
(2) a polyester produced in the presence of a polycondensation catalyst containing at least one compound selected from a group consisting of aluminum compounds and at least one compound selected from a group consisting of phosphorus compounds and characterized in that the haze value of a monoaxially oriented film of it is 2% or lower:
(3) the polyester as described in (1), characterized in that the haze value of a monoaxially oriented film of it is 2% or lower:
(4) the polyester as described in any one of (1) to (3), characterized in that the polyester is polyethylene terephthalate:
(5) the polyester as described in any one of (1) to (4), characterized in that the polyester has a crystallization temperature of 150˚C or higher at the time of heating.
(6) a polyester containing at least aluminum element, an alkaline earth metal element, an alkali metal element, and phosphorus element and characterized as follows;

(1) $3 \leq Al \leq 200$ wherein Al denotes aluminum element content (ppm) in the polyester,
(2) $0.5 \leq A \leq 50$ wherein A denotes alkali metal element content (ppm) in the polyester,
(3) $3 \leq AA \leq 200$ wherein AA denotes alkaline earth metal element content (ppm) in the polyester, and

(4) 0.1 ≤ (phosphorus element)/(aluminum element + alkaline earth metal element) (atomic ratio) ≤ 2.0 wherein phosphorus element, aluminum element, and alkaline earth metal element denote their contents in the polyester:

(7) the polyester as described in any one of (1) to (5), characterized in that the polyester contains at least aluminum element, an alkaline earth metal element, an alkali metal element, and phosphorus element and characterized as follows;

(1) 3 ≤ Al ≤ 200 wherein Al denotes aluminum element content (ppm) in the polyester,
(2) 0.5 ≤ A ≤ 50 wherein A denotes alkali metal element content (ppm) in the polyester,
(3) 3 ≤ AA ≤ 200 wherein AA denotes alkaline earth metal element content (ppm) in the polyester, and
(4) 0.1 ≤ (phosphorus element)/(aluminum element + alkaline earth metal element) (atomic ratio) ≤ 2.0 wherein phosphorus element, aluminum element, and alkaline earth metal element denote their contents in the polyester:

(8) a polyester polymerization catalyst containing an aluminum compound and a phosphorus compound and obtained by mixing the aluminum compound and the phosphorus compound in a solvent:
(9) a polymerization catalyst for a polyester being a catalyst solution containing an aluminum compound and a phosphorus compound and characterized in that the peaks of phosphorus in the catalyst solution include a peak at a chemically shifted position as compared with the peaks of a solution containing the phosphorus compound alone in the case $^{31}$P-NMR spectrum of the catalyst solution is measured:
(10) the polymerization catalyst for a polyester as described in (8) or (9), characterized in that the chemical shift of the peak position is shift to the high magnetic field side and the peak becomes broad:
(11) the polymerization catalyst for a polyester as described in any one of (8) to (10), characterized in that the integrated value of the peaks of NMR spectrum of phosphorus atom bonded with hydroxyl group is 10% or higher to the integrated value of NMR spectrum of phosphorus atom bonded with hydroxyl group in the solution containing the phosphorus compound alone before the solution is mixed with the solution of the aluminum compound:
(12) a polymerization catalyst for a polyester being a catalyst solution containing an aluminum compound and characterized in that the peaks of aluminum in the catalyst solution include a peak at a chemically shifted position as compared with the peaks of a solution containing the aluminum compound alone in the case $^{27}$Al-NMR spectrum of the catalyst solution is measured:
(13) the polymerization catalyst for a polyester as described in any one of (8) to (12) being the solution containing the aluminum compound, characterized in that the ratio of the integrated value of the peaks appearing in a range of -15 to 30 ppm in $^{27}$Al-NMR spectrum to the integrated value of standard peaks is 0.3 or higher:
(14) the polyester polymerization catalyst as described in any one of (8) to (13), characterized in that a solvent is at least one selected from a group consisting of water and alkylene glycols:
(15) the polyester polymerization catalyst as described in any one of (8) to (14), characterized in that at least one of the aluminum compound and the phosphorus compound is mixed while previously being made in a solution or slurry state:
(16) the polyester polymerization catalyst as described in any one of (8) to (15), characterized in that at least one of the aluminum compound and the phosphorus compound previously heated in a solvent is used:
(17) the polyester polymerization catalyst as described in any one of (8) to (16), characterized in that a solution or a slurry containing the aluminum compound and the phosphorus compound mixed together is heated:
(18) the polyester polymerization catalyst as described in any one of (8) to (17), characterized in that the aluminum compound include at least one compound selected from aluminum acetate, basic aluminum acetate, aluminum lactate, aluminum chloride, aluminum hydroxide, aluminum hydroxide chloride, and aluminum acetylacetonate:
(19) the polyester polymerization catalyst as described in any one of (8) to (11) and (13) to (18), characterized in that the phosphorus compound include at least one compound selected from phosphonic acid compounds, phosphinic acid compounds, phosphine oxide compounds, phosphonous acid compounds, phosphinous acid compounds, and phosphine compounds:
(20) a process of producing a polyester using the polymerization catalyst described in any one of (8) to (19):
(21) a process of producing a polyester by using the polymerization catalyst described in any one of (8) to (19), characterized in that the addition timing of the polymerization catalyst is during the time from the transesterification reaction or direct esterification reaction to polycondensation reaction:
(22) a polyester produced by using the polymerization catalyst described in any one of (8) to (19): and
(23) a polyester produced by the polymerization process described in (21).

Effect of the Invention

According to the present inventions a polyester polymerization catalyst excellent in catalytic activity and capable

of providing polyesters excellent in transparency in form of molded articles and particularly scarcely containing insoluble particles, a polyester produced by using the catalyst, and a process of producing a polyester.

Best Modes of the Embodiments of the Invention

Conventionally known aluminum compounds may be used as an aluminum compound composing a polymerization catalyst of the present inventions without any limitation.

Aluminum compound

Practical examples of the aluminum compound may include carboxylic acid salts such as aluminum formate, aluminum acetate, aluminum propionate, aluminum oxalate, aluminum acrylate, aluminum laurate, aluminum stearate, aluminum benzoate; aluminum trichloroacetate, aluminum lactate, aluminum citrate, aluminum tartrate, and aluminum salicylate; inorganic acid salts such as aluminum chloride, aluminum hydroxide, aluminum hydroxide chloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum iso-propoxide, aluminum n-butoxide, and aluminum tert-butoxide; aluminum chelate compounds such as aluminum acetylacetonate, aluminum acetylacetate, aluminum ethylacetoacetate, and aluminum ethylacetoacetate di-iso-propoxide; organoaluminum compounds such as trimethylaluminum and triethylaluminum and their partial hydrolyzates thereof; reaction products of aluminum alkoxides and aluminum chelate compounds with hydroxycarboxylic acids; aluminum oxide, ultra finely granular aluminum oxide, aluminum silicate, composite oxides comprising aluminum, titanium, silicon and zirconium together with alkali metals and alkaline earth metals. Among these, carboxylic acid salts, inorganic acid salts, and chelate compounds are preferable, among which aluminum acetate, aluminum lactate, aluminum chloride, aluminum hydroxide, aluminum hydroxide chloride, and aluminum acetylacetonate are particularly preferable.
Among these aluminum compounds, aluminum acetate, aluminum chloride, aluminum hydroxide, and aluminum hydroxide chloride with high aluminum content are preferable and in terms of the solubility, aluminum acetate, basic aluminum acetate, aluminum chloride, and aluminum hydroxide chloride are more preferable. Further, from a viewpoint that no corrosion of an apparatus is caused, use of aluminum acetate and basic aluminum acetate is particularly preferable.

Herein, aluminum hydroxide chloride is a general name called also as polyaluminum chloride and basic aluminum chloride and those which are used for tap water may be used. They are defined by a general formula, $[Al_2(OH)_nCl_{6-n}]_m$ (wherein $1 \leq n \leq 5$). Among them, those with low chlorine content are preferable from a viewpoint that no corrosion of an apparatus is caused.
The above-mentioned aluminum acetate is a general name for those having aluminum salts of acetic acid such as basic aluminum acetate, aluminum triacetate, and an aluminum acetate solution and among them, in terms of solubility and stability in form of a solution, use of basic aluminum acetate is preferable. In the basic aluminum acetate, aluminum monoacetate, aluminum diacetate, and stabilized compounds thereof with boric acid are preferable. In the case basic aluminum acetate stabilized with boric acid is used, basic aluminum acetate stabilized with boric acid in an equimolecular amount or lower to that of the basic aluminum acetate is preferable to be used and particularly basic aluminum acetate stabilized with boric acid in an amount of 1/3 to 1/2 mole to that of the basic aluminum acetate is more preferable to be used. Besides boric acid, urea and thiourea may be used as the stabilizer for the basic aluminum acetate.

Aluminum solution

With respect to any basic aluminum acetate described above, use of the basic aluminum acetate which is solubilized in a solvent such as water and glycol, particularly the basic aluminum acetate which is solubilized in water and/or ethylene glycol is preferable from a viewpoint of the catalytic activity and the quality of polyesters to be obtained. Examples of a solvent to be used in the invention are water and alkylene glycols. The alkylene glycols may include ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. The alkyl glycols are preferably ethylene glycol, trimethylene glycol, and tetramethylene glycol and more preferably ethylene glycol. Use of basic aluminum acetate solubilized in water and/or ethylene glycol is preferable since it exhibits significant effects of the present inventions.

In the present inventions, the above-mentioned aluminum compound is preferable to be used while being dissolved in ethylene glycol and it is more preferable to use an ethylene glycol solution of an aluminum compound having the ratio of the integrated value of the peak appearing in a range of-15 to 30 ppm in $^{27}$Al-NMR spectrum to the integrated value of standard peaks is 0.3 or higher. The $^{27}$Al-NMR spectrum is measured by a method described in Examples.
The ratio of the integrated value of the peaks is more preferably 0.35 or higher, furthermore preferably 0.40 or higher,

and even more preferably 0.50 or higher. If the ratio of the integrated value of the peaks is lower than 0.3, aluminum containing insoluble particles in a polyester described later will be increased to make it impossible to keep the insoluble particles to 3500 ppm or lower and it is not preferable.
A method of adjusting the ratio of the integrated value of the above-mentioned peak to 0.3 or higher is not particularly limited. It is a preferable embodiment to keep the temperature of the solution from becoming 110˚C or higher in producing a solution of an aluminum compound. The temperature of the solution is more preferably 105˚C or lower and even more preferably 100˚C or lower. As described above, the aluminum compound is preferable to be added to a reaction system finally in form of an ethylene glycol solution. A production method of the ethylene glycol solution is also not particularly limited. It is preferable embodiment to produce the solution by solvent replacement method carried out by once dissolving an aluminum compound in water, adding ethylene glycol to the resulting aqueous solution, and removing water by heating the obtained solution containing the water/ethylene mixed solvent.
Herein, to make a solution includes all of the steps relevant to obtaining a solution such as dissolution and liquid replacement and the like. As a method of lowering a temperature in the solvent replacement, it is a preferable embodiment to be carried out in a reduced pressure to satisfy both of temperature decrease and time saving. In consideration of the efficiency of the solvent replacement, it is preferable to be carried out at 55 to 105˚C and more preferable at 60 to 100˚C.
In a method for keeping the ratio of the integrated value of the above-mentioned peaks to be 0.3 or lower, the quality of an aluminum compound to be used for dissolution is also important. A method of selecting an aluminum compound with a low association degree is also an effective method. A method of suppressing the association of the aluminum compound before dissolution is not particularly limited. For example, it is effective to add an additive for suppressing association at the time of producing an aluminum compound, to lower the temperature of concentrating or drying the liquid in taking out an aluminum compound as solid in the production step, or to lower the drying degree of drying and obtain an aluminum compound as a product in water containing state. It is also a preferable embodiment to use an aluminum compound in a solution state such as an aqueous solution without isolating the aluminum compound.
The selection standard of an aluminum compound with a low association degree may be, for example, a method of specifying amount of insoluble component at the time of aluminum compound is dissolved in water, method of specifying crystallinity of an aluminum compound, and method of specifying the amount of water of crystallization of aluminum compound. Also, it is preferable embodiment to add an additive for improving the solubility of aluminum compound in solvent such as water and to add a compound which improves the stability of an aluminum compound to hydrolysis.
Hereinafter, a dissolution method of an aluminum compound will be exemplified.

(1) Example of production of aqueous solution of basic aluminum acetate
Water is added to a basic aluminum acetate and stirred for a few hours at 50˚C or lower, preferably at room temperature. The stirring time is preferably 3 hours or longer, more preferably 6 hours or longer, and even more preferably 12 hours or longer. After that, heating and stirring are carried out at 60˚C or higher for a few hours or longer. In this process, the temperature is preferably in a range from 60 to 100˚C and more preferably in a range from 60 to 95˚C. The heating time is more preferable as it is shorter. The concentration of the aqueous solution is preferably in a range from 10 g/L to 30 g/L and particularly preferably in a range from 15 g/L to 20 g/L.
(2) Examples of production of ethylene glycol solution of basic aluminum acetate
Ethylene glycol is added to the above-mentioned aqueous solution. The addition amount of ethylene glycol is preferably in a range from 0.5 to 5.0 times, more preferably in a range from 0.8 to 2.0 times, as much as that of the aqueous solution by volume. The resulting solution is stirred to obtain homogeneous water/ethylene glycol mixed solution. Then, the solution is heated to distill water and accordingly obtain an ethylene glycol solution. The temperature is preferably in a range from 70˚C or higher to 200˚C or lower; more preferably 150˚C or lower; furthermore preferably 120˚C or lower; and even more preferably 110˚C or lower to distill water while stirring. At the time of the distillation, the pressure of the system may be reduced. More preferably, water is distilled by heating in reduced pressure and/or in inert gas atmosphere of nitrogen or argon to produce a catalyst solution or slurry. Ethylene glycol can be distilled quickly at a low temperature by decreasing the pressure. That is, distillation can be carried out even at 80˚C or lower under reduced pressure and the heating history applied to the system can be lessened.

The above-mentioned basic aluminum acetate is preferable to be solubilized in a solvent such as water or glycol, particularly in water and/or ethylene glycol, in terms of the catalytic activity and the quality of polyesters to be obtained.
Hereinafter, a production example of an ethylene glycol solution of aluminum lactate will be described.
An aqueous solution of aluminum lactate is produced. The production may be carried out at room temperature or in heating condition and preferably at room temperature. The concentration of the aqueous solution is preferably in a range from 20 g/L to 100 g/L and particularly preferably in a range from 50 to 80 g/L. Ethylene glycol is added to the aqueous solution. The addition amount by volume of ethylene glycol is 1 to 5 times, more preferably 2 to 3 times, as much as that of the aqueous solution. After the solution is stirred at room temperature to obtain homogeneous water/ethylene glycol mixed solution, the solution is heated to distill water and accordingly obtain an ethylene glycol solution. The

temperature is preferably 70˚C or higher and 120˚C or lower, more preferably 90 to 110˚C, for a few hours to distill water while stirring.

Use amount of aluminum compound

The use amount of an aluminum compound in the present inventions is preferably 0.001 to 0.05% by mole and more preferably 0.005 to 0.02% by mole to the number of moles of all of the constituent units of carboxylic acid components such as a dicarboxylic acid and a polycarboxylic acid of the polyester to be obtained. If the use amount is less than 0.001% by mole, the catalytic activity cannot be sometimes exhibited sufficiently and if the use amount exceeds 0.05% by mole, the heat stability and thermooxidation stability may possibly be lowered and formation of insoluble particles and discoloration of polyester attributed to aluminum may be increased in some cases. As described, the present inventions are particularly characterized in that even if the addition amount of an aluminum component is low, the polymerization catalyst of the present inventions shows sufficient catalytic activity. As a result, heat stability and thermooxidation stability are made excellent and insoluble particles and discoloration of polyester attributed to aluminum can be lowered.

Phosphorus compound

A phosphorus compound composing the polymerization catalyst of the present inventions is not particularly limited and examples of the phosphorus compound may include phosphoric acid, phosphoric acid esters such as trimethyl phosphate, triethyl phosphate, phenyl phosphate, and triphenyl phosphate; phosphorous acid and phosphorous acid esters such as trimethyl phosphite, triethyl phosphite, triphenyl phosphite, tris(2,4-di-tert-butylphenyl) phosphite, tetrakis (2,4-di-tert-butylphenyl) 4,4'-biphenylenediphosphite.
A phosphorus compound more preferable in the invention may be at least one kind of phosphorus compounds selected from a group consisting of phosphonic acid compounds, phosphinic acid compounds, phosphine oxide compounds, phosphonous acid compounds, phosphinous acid compounds, and phosphine compounds. Use of the phosphorus compound improves the effect of the catalytic activity and the effect of improving the properties such as thermal stability of polyester. A phosphonic acid compound among them is preferable, since the effect of the physical property improvement and the effect of the catalytic activity improvement become significant. A compound having an aromatic ring structure among the above-mentioned phosphorus compounds is preferable, since the effect of the physical property improvement and the effect of the catalytic activity improvement become considerably significant.
The phosphonic acid compounds, phosphinic acid compounds, phosphine oxide compounds, phosphonous acid compounds, phosphinous acid compounds, and phosphine compounds in the present inventions are the compounds having the structures defined by the following formulas (Formula 1) to (Formula 6)

**[Formula 1]**

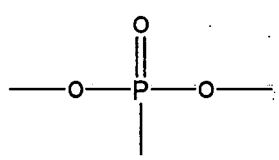

**[Formula 2]**

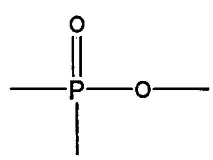

**[Formula 3]**

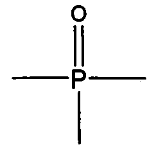

**[Formula 4]**

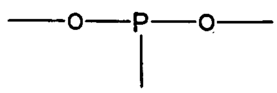

**[Formula 5]**

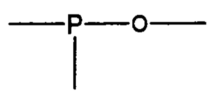

**[Formula 6]**

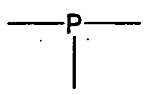

The phosphonic acid compounds in the present inventions may include dimethyl methylphosphonate, diphenyl methylphosphonate, dimethyl phenylphosphonate, diethyl phenylphosphonate, diphenyl phenylphosphonate, dimethyl benzylphosphonate, and diethyl benzylphosphonate. The phosphinic acid compounds in the present inventions may include diphenylphosphinic acid, methyl diphenylphosphinate, phenyl diphenylphosphinate, phenylphosphinic acid, methyl phenylphosphinate, and phenyl phenylphosphinate. The phosphine oxide compounds in the present inventions may include diphenylphosphine oxide, methyldiphenylphosphine oxide, and triphenylphosphine oxide.

As phosphorus compounds in the present inventions among the phosphinic acid compounds, phosphine compounds, phosphonous acid compounds, phosphinous acid compounds, and phosphine compounds, the following compounds defined by the following formulas (Formula 7) to (Formula 12) are preferable.

**[Formula 7]**

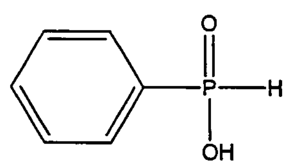

**[Formula 8]**

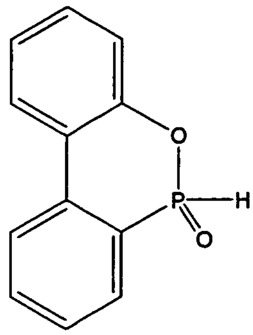

[Formula 9]

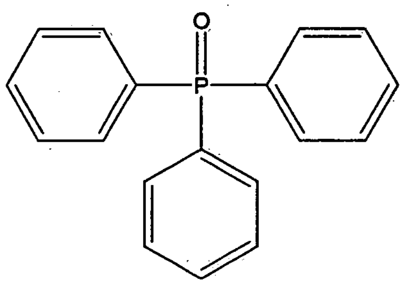

[Formula 10]

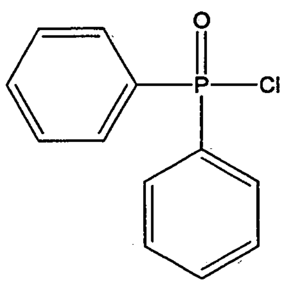

[Formula 11]

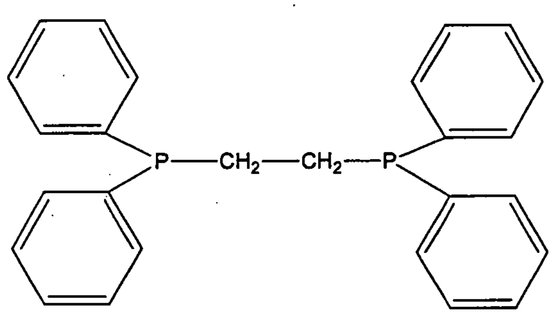

**[Formula 12]** $[(CH_3)(CH_2)_7]_3P$

Among the above-mentioned phosphorus compounds, use of compounds having aromatic ring structure is preferable, since the effect of the physical property improvement and the effect of the catalytic activity improvement become

considerably significant.

Also, use of the compounds defined by the following general formulas (Formula 13) and (Formula 15) is preferable as the phosphorus compounds of the invention, since the effect of the physical property improvement and the effect of the catalytic activity improvement become particularly significant.

**[Formula 13]** $P(=O)R^1(OR^2)(OR^3)$

**[Formula 14]** $P(=O)R^1R^4(OR^2)$

**[Formula 15]** $P(=O)R^1R^5R^6$

(In the formulas (Formula 13) to (Formula 15), $R^1$, $R^4$, $R^5$, and $R^6$ independently denote hydrogen, a hydrocarbon group of 1 to 50 carbon atoms, or a hydrocarbon group of 1 to 50 carbon atoms containing hydroxyl, a halogen group, an alkoxyl group, or an amino group. $R^2$ and $R^3$ independently denote hydrogen, a hydrocarbon group of 1 to 50 carbon atoms, or a hydrocarbon group of 1 to 50 carbon atoms containing hydroxyl group or an alkoxyl group. Herein, hydrocarbon group may include alicyclic structure such as cyclohexyl and aromatic ring structure such as phenyl and naphthyl.)

The phosphorus compounds of the present inventions are particularly preferable to be compounds having aromatic ring structure for $R^1$, $R^4$, $R^5$, and $R^6$ in the above-mentioned formulas (Formula 13) to (Formula 15).

The phosphorus compounds of the present inventions may include dimethyl methylphosphonate, diphenyl methylphosphonate, dimethyl phenylphosphonate, diethyl phenylphosphonate, diphenyl phenylphosphonate, dimethyl benzylphosphonate, diethyl benzylphosphonate, diphenylphosphinic acid, methyl diphenylphosphinate, phenyl diphenylphosphinate, phenylphosphinic acid, methyl phenylphosphinate, phenyl phenylphosphinate, diphenylphosphine oxide, methyldiphenylphosphine oxide, and triphenylphosphine oxide. Among them, dimethyl phenylphosphonate and diethyl benzylphosphonate are particularly preferable.

In the present inventions, metal salt compounds of phosphorus as the phosphorous compounds among the above-mentioned phosphorus compounds are particularly preferable. The metal salt compounds of phosphorus are not particularly limited, if they are metal salts of phosphorus compounds. Use of metal salts of phosphonic acid compounds is preferable, since the effect of the physical property improvement of polyesters and the effect of the catalytic activity improvement, which are the purposes of the present inventions, become significant. The metal salts of phosphorus compounds include monometal salt, dimetal salt, and trimetal salt, and the like.

Among the above-mentioned phosphorus compounds, use of those in which the metal portions of the metal salt are selected from Li, Na, K, Be, Mg, Sr, Ba, Mn, Ni, Cu, and Zn is preferable, since the effect of the catalytic activity improvement becomes significant. Li, Na, and Mg are particularly preferable among them.

As the metal salt compounds of phosphorus of the present inventions, at least one selected from the compounds defined by the following general formula (Formula 16) is preferable, since the effect of the physical property improvement and the effect of the catalytic activity improvement become significant.

**[Formula 16]**

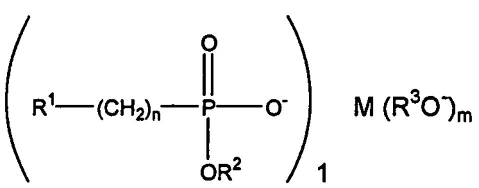

(In the formula (Formula 16), $R^1$ denotes hydrogen, a hydrocarbon group of 1 to 50 carbon atoms, or a hydrocarbon group of 1 to 50 carbon atoms containing hydroxyl group, a halogen group, an alkoxyl group, or an amino group. $R^2$ denotes hydrogen, a hydrocarbon group of 1 to 50 carbon atoms, or a hydrocarbon group of 1 to 50 carbon atoms containing hydroxyl group or an alkoxyl group. $R^3$ denotes hydrogen, a hydrocarbon group of 1 to 50 carbon atoms, or a hydrocarbon group of 1 to 50 carbon atoms containing hydroxyl group, an alkoxyl group, or a carbonyl group. The reference character 1 denotes an integer of 1 or higher; m denotes 0 or an integer of 1 or higher; and 1 + m is 4 or lower. M denotes a metal cation with (1 + m) valence. The reference character n denotes an integer of 1 or higher. Herein, the hydrocarbon group may include alicyclic structure such as cyclohexyl and aromatic ring structure such as phenyl and naphthyl.)

Examples of the above-mentioned $R^1$ may be phenyl, 1-naphthyl, 2-naphthyl, 9-anthryl, 4-biphenyl, and 2-biphenyl.

Examples of the above-mentioned $R^2$ may be hydrogen, methyl, ethyl, propyl, isopropyl, n-butyl, sec-butyl, tert-butyl, a long chain aliphatic group, phenyl, naphthyl, substituted phenyl and naphthyl, and a group defined as $-CH_2CH_2OH$. Examples of $R^3O^-$ may be hydroxide ion, alcoholate ion, acetate ion, and acetylacetone ion.

At least one selected from the compounds defined by the following general formula (Formula 17) is preferable to be used among the compounds defined by the above-mentioned general formula (Formula 16).

**[Formula 17]**

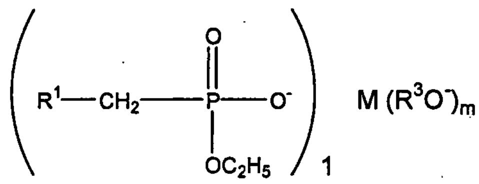

(In the formula (Formula 17), $R^1$ denotes hydrogen, a hydrocarbon group of 1 to 50 carbon atoms, or a hydrocarbon group of 1 to 50 carbon atoms containing hydroxyl group, a halogen group, an alkoxyl group, or an amino group. $R^3$ denotes hydrogen, a hydrocarbon group of 1 to 50 carbon atoms, or a hydrocarbon group of 1 to 50 carbon atoms containing hydroxyl group, an alkoxyl group, or a carbonyl group. The reference character 1 denotes an integer of 1 or higher; m denotes 0 or an integer of 1 or higher; and 1 + m is 4 or lower. M denotes a metal cation with (1 + m) valence. The hydrocarbon group may include alicyclic structure such as cyclohexyl and aromatic ring structure such as phenyl and naphthyl.)

Examples of the above-mentioned $R^1$ may be phenyl, 1-naphthyl, 2-naphthyl, 9-anthryl, 4-biphenyl, and 2-biphenyl. Examples of $R^3O^-$ may be hydroxide ion, alcoholate ion, acetate ion, and acetylacetone ion.

Among the above-mentioned phosphorus compounds, use of compounds having aromatic ring structure is preferable, since the effect of the physical property improvement and the effect of the catalytic activity improvement become significant.

By using compounds having a metal for M selected from Li, Na, K, Be, Mg, Sr, Ba, Mn, Ni, Cu, and Zn among the compounds defined by the formulas (Formula 17), the effect of the catalytic activity improvement is significant and therefore, it is preferable. Among the metals are Li, Na, and Mg particularly preferable.

Examples of the metal salt compounds of phosphorus of the present inventions are lithium [ethyl (1-naphthyl) methylphosphonate], sodium [ethyl (1-naphthyl)methylphosphonate], magnesium bis[ethyl (1-naphthyl)methylphosphonate], potassium [ethyl (2-naphthyl)methylphosphonate], magnesium bis[ethyl (2-naphthyl)methylphosphonate], lithium [ethyl benzylphosphonate], sodium [ethyl benzylphosphonate], magnesium bis[ethyl benzylphosphonate], beryllium bis [ethyl benzylphosphonate], strontium bis[ethyl benzylphosphonate], manganese bis[ethyl benzylphosphonate], sodium benzylphosphonate, magnesium bis[benzylphosphonate], sodium [ethyl (9-anthryl)methylphosphonate], magnesium bis[ethyl (9-anthryl)methylphosphonate], sodium [ethyl 4-hydroxybenzylphosphonate], magnesium bis[ethyl 4-hydroxybenzylphosphonate], sodium [phenyl 4-chlorobenzylphosphonate], magnesium bis[ethyl 4-chlorobenzylphosphonate], sodium [methyl 4-aminobenzylphosphonate], magnesium bis[methyl 4-aminobenzylphosphonate], sodium phenylphosphonate, magnesium bis[ethyl phenylphosphonate], and zinc bis[ethyl phenylphosphonate]. Particularly preferable compounds among them are lithium [ethyl (1-naphthyl)methylphosphonate], sodium [ethyl (1-naphthyl)methylphosphonate], magnesium bis[ethyl (1-naphthyl)methylphosphonate], lithium [ethyl benzylphosphonate], sodium [ethyl benzylphosphonate], magnesium bis[ethyl benzylphosphonate], sodium benzylphosphonate, and magnesium bis[benzylphosphonate].

In the present inventions, among the above-mentioned phosphorus compounds, phosphorus compounds having at least one P-OH bond are particularly preferable as the phosphorus compounds. Addition of these phosphorus compounds improves the effect of improving physical properties of polyesters and in addition, the effect of improving the catalytic activity is considerably heightened by using these phosphorus compounds in combination with the aluminum compounds of the present inventions at the time of polymerization of polyester.

The phosphorus compounds having at least one P-OH bond are not particularly limited as long as they are phosphorus compound having at least one P-OH in a molecule. Use of phosphonic acid compounds having at least one P-OH bond among these phosphorus compounds is preferable, since the effect of the physical property improvement of polyesters and the effect of the catalytic activity improvement become significant.

Use of compounds having aromatic ring structure among these phosphorus compounds is preferable, since the effect of the physical property improvement and the effect of the catalytic activity improvement become significant.

Use of at least one selected from the compounds defined by the following general formula (Formula 18) is preferable

as phosphorus compounds having at least one P-OH bond of the present inventions, since the effect of the physical property improvement and the effect of the catalytic activity improvement become significant.

**[Formula 18]**

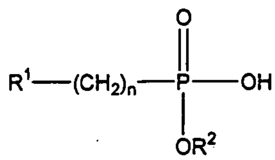

(In the formula (Formula 18), $R^1$ denotes hydrogen, a hydrocarbon group of 1 to 50 carbon atoms, or a hydrocarbon group of 1 to 50 carbon atoms containing hydroxyl group, a halogen group, an alkoxyl group, or an amino group. $R^2$ denotes hydrogen, a hydrocarbon group of 1 to 50 carbon atoms, or a hydrocarbon group of 1 to 50 carbon atoms containing hydroxyl group or an alkoxyl group. The reference character n denotes an integer of 1 or higher. Herein, the hydrocarbon group may include alicyclic structure such as cyclohexyl, branched structure, and aromatic ring structure such as phenyl and naphthyl.)

Examples of the above-mentioned $R^1$ may be phenyl, 1-naphthyl, 2-naphthyl, 9-anthryl, 4-biphenyl, and 2-biphenyl. Examples of the above-mentioned $R^2$ may be hydrogen, methyl, ethyl, propyl, isopropyl, n-butyl, sec-butyl, tert-butyl, a long chain aliphatic group, phenyl, naphthyl, substituted phenyl and naphthyl, and a group defined as $-CH_2CH_2OH$. Use of compounds having aromatic ring structure among these phosphorus compounds is preferable, since the effect of the physical property improvement and the effect of the catalytic activity improvement become significant.

Examples of phosphorus compounds having at least one P-OH bond may be ethyl (1-naphthyl)methylphosphonate, (1-naphthyl)methylphosphonic acid, ethyl (2-naphthyl)methylphosphonate, ethyl benzylphosphonate, benzylphosphonic acid, ethyl (9-anthryl)methylphosphonate, ethyl 4-hydroxybenzylphosphonate, ethyl 2-methylbenzylphosphonate, phenyl 4-chlorobenzylphosphonate, methyl 4-aminobenzylphosphonate, and ethyl 4-methoxybenzylphosphonate. Among them are ethyl (1-naphthyl)methylphosphonate and ethyl benzylphosphonate particularly preferable.

Phosphorus compounds defined by the following chemical formula (Formula 19) are exemplified as preferable phosphorus compounds of the present inventions.

**[Formula 19]** $R^1-CH_2-P(=O)(OR^2)(OR^3)$

(In the formula (Formula 19), $R^1$ denotes a hydrocarbon group of 1 to 49 carbon atoms, or a hydrocarbon group of 1 to 49 carbon atoms containing hydroxyl group, a halogen group, an alkoxyl group, or an amino group. $R^2$ and $R^3$ independently denote hydrogen, a hydrocarbon group of 1 to 50 carbon atoms, or a hydrocarbon group of 1 to 50 carbon atoms containing hydroxyl group or an alkoxyl group. The hydrocarbon group may include alicyclic structure, branched structure, and aromatic ring structure.)

Further preferable compounds are those having aromatic ring structure for at least one of $R^1$, $R^2$, and $R^3$ in the chemical formula (Formula 19).

Practical examples of the phosphorus compounds are as follows.

**[Formula 20]**

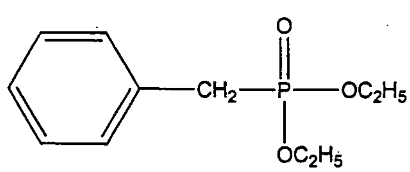

BPADE

**[Formula 21]**

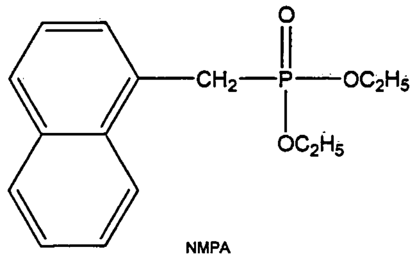

NMPA

**[Formula 22]**

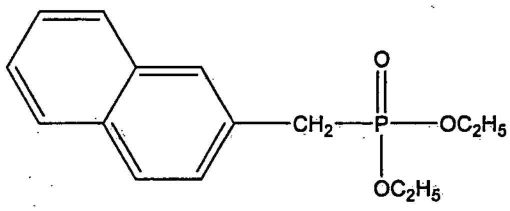

2-NMPA

**[Formula 23]**

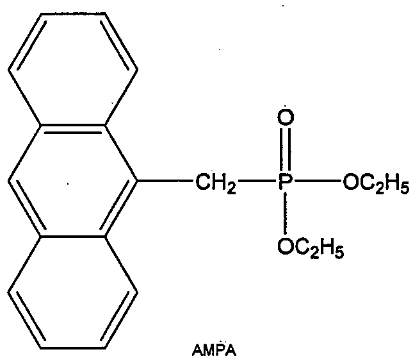

AMPA

**[Formula 24]**

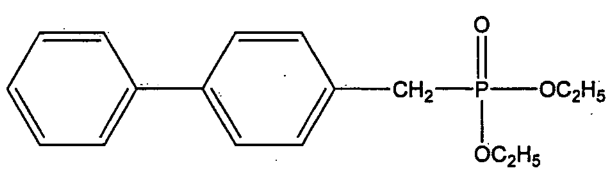

4PBPADE

**[Formula 25]**

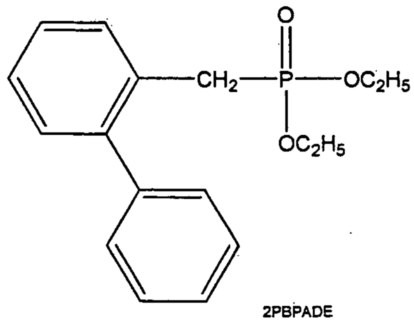

2PBPADE

Also, the phosphorus compounds of the present inventions are preferably those having a high molecular weight as they are hard to be distilled in polymerization and thus effective.

The phosphorus compounds of the present inventions are preferably phosphorus compounds having a phenol portion within molecule. By use of the phosphorus compounds have a phenol portion within molecule, the effect of the physical property improvement of polyesters is heightened. In addition, by use of the phosphorus compounds having a phenol portion within molecule are used in polymerization of polyester, the effect of the catalytic activity improvement is more heightened and therefore, these compounds are excellent in the productivity of polyesters.

The phosphorus compounds having a phenol portion within molecule are not particularly limited as long as they are phosphorus compounds having phenol structure. Use of one or more compounds selected from a group consisting of phosphonic acid compounds, phosphinic acid compounds, phosphine oxide compounds, phosphonous acid compounds, phosphinous acid compounds, and phosphine compounds having a phenol portion within molecule is preferable, since the effect of the physical property improvement of polyester and the effect of the catalytic activity improvement become considerably significant. Among them, use of phosphonic acid compounds having one or more phenol portions within molecule is preferable, since the effect of the physical property improvement of polyester and the effect of the catalytic activity improvement become considerably significant.

Compounds defined by the following general formulas (Formula 26) to (Formula 28) are preferable as the phosphorus compounds having the phenol portion within molecule of the present inventions.

**[Formula 26]** $P(=O)R^1(OR^2)(OR^3)$

**[Formula 27]** $P(=O)R^1R^4(OR^2)$

**[Formula 28]** $P(=O)R^1R^5R^6$

(In the formulae (Formula 26) to (Formula 28), $R^1$ denotes a hydrocarbon group of 1 to 50 carbon atoms and including phenol portion, or a hydrocarbon group of 1 to 50 carbon atoms containing substituent group such as hydroxyl group, a halogen group, an alkoxyl group, or an amino group as well as phenol portion. $R^4$, $R^5$, and $R^6$ independently denote hydrogen, a hydrocarbon group of 1 to 50 carbon atoms, or a hydrocarbon group of 1 to 50 carbon atoms containing substituent group such as hydroxyl group, halogen group, an alkoxyl group, or an amino group. $R^2$ and $R^3$ independently denote hydrogen, a hydrocarbon group of 1 to 50 carbon atoms, or a hydrocarbon group of 1 to 50 carbon atoms containing substituent group such as hydroxyl group or an alkoxyl group. The hydrocarbon group may include branched structure, alicyclic structure such as cyclohexyl, and aromatic ring structure such as phenyl and naphthyl. Terminals of $R^2$ and $R^4$ may be bonded to each other.)

Examples of the phosphorus compounds having phenol portion within molecule of the present inventions may include p-hydroxyphenylphosphonic acid, dimethyl p-hydroxyphenylphosphonate, diethyl p-hydroxyphenylphosphonate, diphenyl p-hydroxyphenylphosphonate, bis(p-hydroxyphenyl)phosphonic acid, methyl bis(p-hydroxyphenyl)phosphonate, phenyl bis(p-hydroxyphenyl)phosphonate, p-hydroxyphenylphenylphosphinic acid, methyl p-hydroxyphenylphenylphosphinate, phenyl p-hydroxyphenylphenylphosphinate, p-hydroxyphenylphosphinic acid, methyl p-hydroxyphenylphosphinate, phenyl p-hydroxyphenylphosphinate, bis(p-hydroxyphenyl)phosphine oxide, tris(p-hydroxyphenyl) phosphine oxide, bis(p-hydroxyphenyl)methylphosphine oxide, and compounds defined by the following formulae (Formula 29) to (Formula 32). Among them, compounds defined by the following formula (Formula 31) and dimethyl p-hydroxyphenylphosphonate are particularly preferable.

[Formula 29]

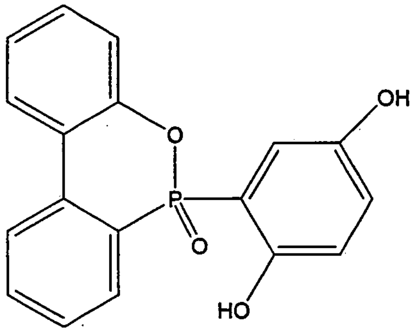

[Formula 30]

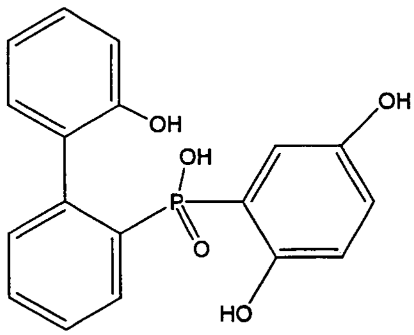

[Formula 31]

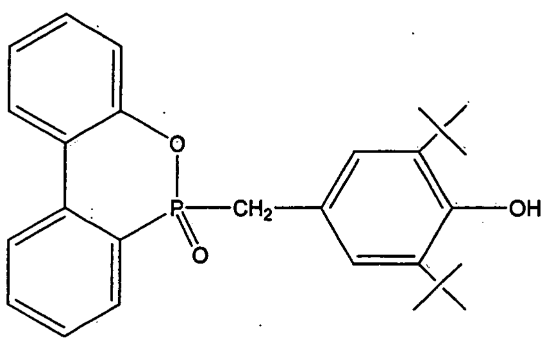

**[Formula 32]**

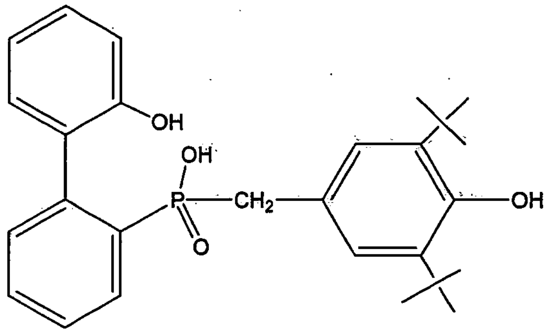

Usable compounds defined by the formula (Formula 31) may include SANKO-220 (manufactured by SANKO Co., Ltd.).

At least one compound selected from the specified metal salt compounds of phosphorus defined by the following general formula (Formula 33) is particularly preferable among the phosphorus compounds having phenol portion within molecule of the present inventions.

**[Formula 33]**

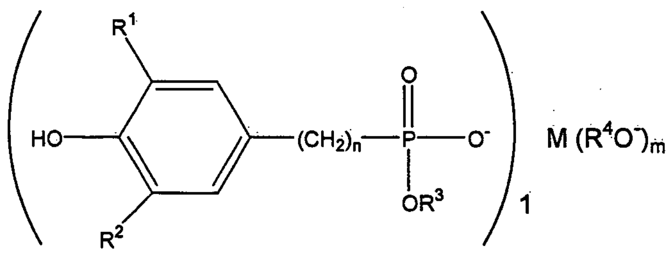

(In the formula (Formula 33), $R^1$ and $R^2$ independently denote hydrogen and a hydrocarbon group of 1 to 30 carbon atoms. $R^3$ denotes hydrogen, a hydrocarbon group of 1 to 50 carbon atoms, or a hydrocarbon group of 1 to 50 carbon atoms containing hydroxyl group or an alkoxyl group. $R^4$ denotes hydrogen, a hydrocarbon group of 1 to 50 carbon atoms, or a hydrocarbon group of 1 to 50 carbon atoms containing hydroxyl group, an alkoxyl group, or a carbonyl group. $R^4O^-$ includes hydroxide ion, alcoholate ion, acetate ion, or acetylacetone ion. The reference character 1 denotes an integer of 1 or higher; m denotes 0 or an integer of 1 or higher; and 1 + m is 4 or lower. M denotes a metal cation with (1 + m) valence. The reference character n denotes an integer of 1 or higher. The hydrocarbon group may include alicyclic structure such as cyclohexyl, branched structure, and aromatic ring structure such as phenyl and naphthyl.)

Among these compounds at least one compound selected from compounds defined by the following formula (Formula 34) is preferable.

**[Formula 34]**

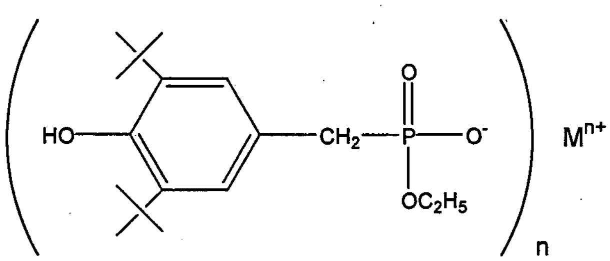

(In the formula [Formula 34], $M^{n+}$ denotes a metal cation with n-valence. The reference character n denotes 1, 2, 3, or 4.) Use of compounds having a metal for M selected from Li, Na, K, Be, Mg, Sr, Ba, Mn, Ni, Cu, and Zn among the compounds defined by the formulas (Formula 33) and (Formula 34) is preferable, since the effect of the catalytic activity

improvement is significant. Among the metals, Li, Na, and Mg particularly are preferable.

Examples of the specified metal salt compounds of phosphorus of the present inventions include lithium [ethyl 3,5-di-tert-butyl-4-hydroxybenzylphosphonate], sodium [ethyl 3,5-di-tert-butyl-4-hydroxybenzylphosphonate], sodium [3,5-di-tert-butyl-4-hydroxybenzylphosphonic acid], potassium [ethyl 3,5-di-tert-butyl-4-hydroxybenzlyphosphonate], magnesium bis[ethyl 3,5-di-tert-butyl-4-hydroxybenzylphosphonate], magnesium bis[3,5-di-tert-butyl-4-hydroxybenzylphosphonic acid], beryllium bis[methyl 3,5-di-tert-butyl-4-hydroxybenzylphosphonate], strontium bis[ethyl 3,5-di-tert-butyl-4-hydroxybenzylphosphonate], barium bis[phenyl 3,5-di-tert-butyl-4-hydroxybenzylphosphonate], manganese bis [ethyl 3,5-di-tert-butyl-4-hydroxybenzylphosphonate], nickel bis[ethyl 3,5-di-tert-butyl-4-hydroxybenzylphosphonate], copper bis[ethyl 3,5-di-tert-butyl-4-hydroxybenzylphosphonate], and zinc bis[ethyl 3,5-di-tert-butyl-4-hydroxybenzylphosphonate]. Among them lithium [ethyl 3,5-di-tert-butyl-4-hydroxybenzylphosphonate], sodium [ethyl 3,5-di-tert-butyl-4-hydroxybenzylphosphonate], and magnesium bis[ethyl 3,5-di-tert-butyl-4-hydroxybenzylphosphonate] particularly are preferable.

At least one compound selected from specified phosphorus compounds having at least one P-OH bond and defined by the following general formula (Formula 35) is particularly preferable among the phosphorus compounds having phenol portion within molecule of the present inventions.

**[Formula 35]**

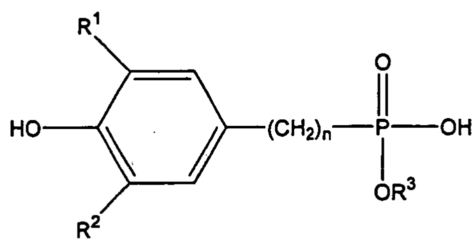

(In the formula (Formula 35), $R^1$ and $R^2$ independently denote hydrogen and a hydrocarbon group of 1 to 30 carbon atoms. $R^3$ denotes hydrogen, a hydrocarbon group of 1 to 50 carbon atoms, or a hydrocarbon group of 1 to 50 carbon atoms containing hydroxyl group or an alkoxyl group. The reference character n denotes an integer of 1 or higher. The hydrocarbon group may include alicyclic structure such as cyclohexyl, branched structure, and aromatic ring structure such as phenyl and naphthyl.)

At least one compound selected from compounds defined by the following general formula (Formula 36) is particularly preferable among these compounds.

**[Formula 36]**

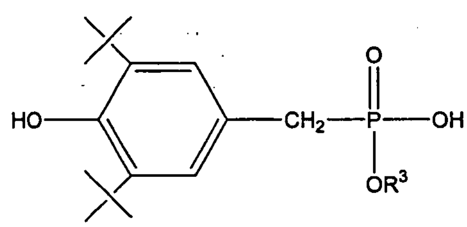

(In the formula (Formula 36), $R^3$ denotes hydrogen and a hydrocarbon group of 1 to 50 carbon atoms, or a hydrocarbon group of 1 to 50 carbon atoms containing hydroxyl group or an alkoxyl group. The hydrocarbon group may include alicyclic structure such as cyclohexyl, branched structure, and aromatic ring structure such as phenyl and naphthyl.) Examples of groups denoted by $R^3$ are hydrogen, methyl, ethyl, propyl, isopropyl, n-butyl, sec-butyl, tert-butyl, a long chain aliphatic group, phenyl, naphthyl, substituted phenyl and naphthyl, and a group defined as $-CH_2CH_2OH$.

The specified phosphorus compounds having at least one P-OH bond of the present inventions may include ethyl 3,5-di-tert-butyl-4-hydroxybenzylphosphonate, methyl 3,5-di-tert-butyl-4-hydroxybenzylphosphonate, isopropyl

3,5-di-tert-butyl-4-hydroxybenzylphosphonate, phenyl 3,5-di-tert-butyl-4-hydroxybenzylphosphonate, octadecyl 3,5-di-tert-butyl-4-hydroxybenzylphosphonate, and 3,5-di-tert-butyl-4-hydroxybenzylphosphonic acid. Among them ethyl 3,5-di-tert-butyl-4-hydroxybenzylphosphonate and methyl 3,5-di-tert-butyl-4-hydroxybenzylphosphonate particularly are preferable.

At least one phosphorus compound selected from specified phosphorus compounds defined by the following general formula (Formula 37) is particularly preferable among the phosphorus compounds having phenol portion within molecule of the present inventions.

**[Formula 37]**

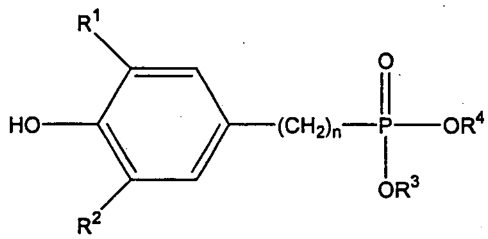

(In the formula (Formula 37), $R^1$ and $R^2$ independently denote hydrogen or a hydrocarbon group of 1 to 30 carbon atoms. $R^3$ and $R^4$ independently denote hydrogen, a hydrocarbon group of 1 to 50 carbon atoms, or a hydrocarbon group of 1 to 50 carbon atoms containing hydroxyl group or an alkoxyl group. The reference character n denotes an integer of 1 or higher. The hydrocarbon group may include alicyclic structure such as cyclohexyl, branched structure, and aromatic ring structure such as phenyl and naphthyl.)

Use of at least one compound selected from compounds defined by the following general formula (Formula 38) among those compounds defined by the formula (Formula 37) is preferable, since the effect of the physical property improvement of polyester and the effect of the catalytic activity improvement become considerably significant.

**[Formula 38]**

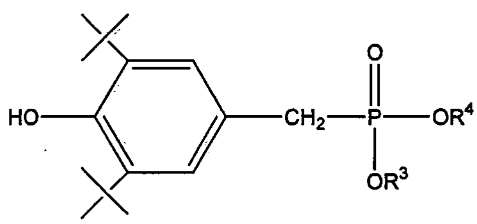

(In the formula (Formula 38), $R^3$ and $R^4$ independently denote hydrogen, a hydrocarbon group of 1 to 50 carbon atoms, or a hydrocarbon group of 1 to 50 carbon atoms containing hydroxyl group or an alkoxyl group. The hydrocarbon group may include alicyclic structure such as cyclohexyl, branched structure, and aromatic ring structure such as phenyl and naphthyl.)

Examples of groups denoted by $R^3$ and $R^4$ are hydrogen, short chain aliphatic groups such as methyl and butyl; long chain aliphatic groups such as octadecyl; aromatic groups such as phenyl and naphthyl, substituted phenyl and naphthyl, and a group defined as $-CH_2CH_2OH$.

Examples of the specified phosphorus compounds of the present inventions may include diisopropyl 3,5-di-tert-butyl-4-hydroxybenzylphosphonate, di-n-butyl 3,5-di-tert-butyl-4-hydroxybenzylphosphonate, dioctadecyl 3,5-di-tert-butyl-4-hydroxybeazylphosphonate, and diphenyl 3,5-di-tert-butyl-4-hydroxybenzylphosphonate. Among them dioctadecyl 3,5-di-tert-butyl-4-hydroxybenzylphosphonate and diphenyl 3,5-di-tert-butyl-4-hydroxybenzylphosphonate particularly are preferable.

At least one phosphorus compound selected from compounds defined by the following general formulas (Formula 39) and (Formula 40) is particularly preferable among the phosphorus compounds having phenol portion within molecule of the present inventions.

[Formula 39]

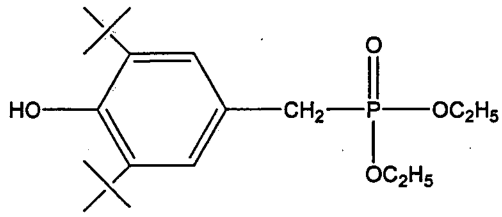

[Formula 40]

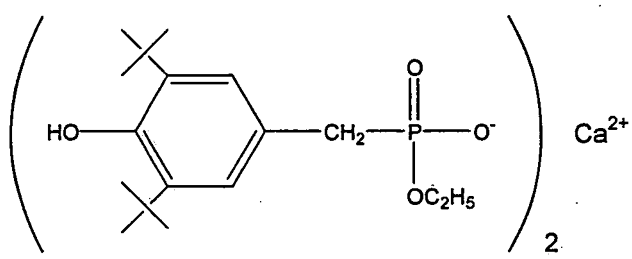

Irganox 1222 (manufactured by Ciba Specialty Chemicals K.K.) is commercialized as a compound defined by the above-mentioned chemical formula (Formula 39) and Irganox 1425 (manufactured by Ciba Specialty Chemicals K.K.) is commercialized as a compound defined by the above-mentioned chemical formula (Formula 40) and both are usable.

Phosphorus compounds have been known as thermal stabilizers for polyesters, however it has not been known that melt polymerization is remarkably promoted in the case these compounds are used in combination with a conventional metal-containing polyester polymerization catalyst. Actually, it is not confirmed that by addition of a phosphorus compound of the present inventions, the polymerization is promoted to such a high level for practical application in polymerization of a polyester using an antimony compound, a titanium compound, a tin compound, or a germanium compound, which are representative catalyst for polyester polymerization, as a polymerization catalyst.

Use amount of phosphorus compound

The use amount of a phosphorus compound in producing a polyester according to the process of the present inventions, it is preferably 0.0001 to 0.1% by mole and more preferably 0.005 to 0.05% by mole to the number of moles of the entire constituent units of the polycarboxylic acid components of the polyester obtained.

Owing to combination use with the phosphorus compound of the present inventions, even if an addition amount of aluminum in the polyester polymerization catalyst is slight, it is made possible to obtain a catalyst having sufficient catalytic function. If the addition amount of the phosphorus compound is less than 0.0001% by mole, the addition effect cannot be sometimes exhibited and if it is added more than 0.1% by mole, the catalytic activity as a polyester polymerization catalyst may possibly adversely be decreased. The tendency of decrease is altered depending on the use amount of aluminum.

Phosphorus compound solution

In the invention, it is a preferable embodiment to use the above-mentioned phosphorus compound after previous heating in at least one kind solvent selected form a group consisting of water and alkylene glycols. Owing to the treatment, combination use of aluminum and an aluminum compound with the above-mentioned phosphorus compound improves the polycondensation catalytic activity and suppresses insoluble particles formation attributed to the polycondensation catalyst.

A solvent to be used at the time of previous heating treatment of the phosphorus compound is not particularly limited if it is at least one kind solvent selected from a group consisting of water and alkylene glycol and it is preferable to use a solvent in which the phosphorus compound can be dissolved. As an alkylene glycol, it is preferable to use glycol such as ethylene glycol, which is a constituent component of aimed polyester. The heating treatment in the solvent is preferable to be carried out after the phosphorus compound is dissolved, however the phosphorus compound is not necessarily

dissolved completely. Further, after heating treatment, the compound is not necessarily required to maintain original structure and may be so modified by heating treatment as to improve the solubility in the solvent.

The temperature of the heating treatment is not particularly limited; it is preferably in a range from 20 to 250˚C. It is more preferably in a range from 100 to 200˚C. The upper limit of the temperature is preferably close to the boiling point of the solvent to be used. Although the heating time differs depending on the conditions such as temperature, it is preferably in a range from 1 minute to 50 hours, more preferably in a range from 30 minutes to 10 hours, and even more preferably in a range from 1 hour to 5 hours, in the case the temperature is close to the boiling point of the solvent. The pressure of the system of the heating treatment is not particularly limited and may be atmospheric pressure, or higher, or lower. The concentration of the solution on the basis of the phosphorus compound is preferably 1 to 500 g/L, more preferably 5 to 300 g/L, and even more preferably 10 to 100 g/L. Heating treatment is preferably carried out in an inert gas atmosphere such as nitrogen. The storage temperature of the solution or slurry after heating is not particularly limited; it is preferably in a range from 0˚C to 100˚C and more preferably in a range from 20˚C to 60˚C. The storage of the solution is preferably carried out in an inert gas atmosphere such as nitrogen.

In this case, it is a preferable embodiment that the phosphorus compound has hydroxyl group. Accordingly, it is preferable that the phosphorus compound has a structural compound having at least one hydroxyl group within molecule of the phosphorus compound. For example, oxide compounds and acid/ester compound mixture of acids and esters among the above-mentioned phosphorus compounds can be exemplified. In the case of a completely esterified compound, that is, all of the hydroxyl groups of the phosphorus compound are esterified, it is a preferable embodiment that the phosphorus compound to be used is previously treated with a water-containing solvent such as water and alkylene glycols to hydrolyze the ester bonds and convert some of the ester bonds into hydroxyl groups. In this case, the quantity of conversion into the hydroxyl groups is not particularly limited. Since the amount of the insoluble particles in the polyester is extremely small quantities and the effect to decrease the insoluble particles in the polyester by hydroxyl group introduction can be exhibited in extremely small quantities, it is effective the quantity is only a few % by mole in the total ester bonds. Accordingly, even if the ester type phosphorus compound of which all of the hydroxyl groups are esterified is used, since the effect can be exhibited also by the hydroxyl groups formed in mixing treatment of the phosphorus compound with the aluminum compound solution, use of the ester type phosphorus compound is not excluded.

Mixed solution of aluminum compound and phosphorus compound

To lower the amount of aluminum containing insoluble particles in polyester, a catalyst of the present inventions is obtained by mixing an aluminum compound and a phosphorus compound in a solvent.

A mixing method may be a method of adding aluminum or its compound in form of a powder, a solution, or a slurry to a solution of a phosphorus compound or a method of adding a phosphorus compound in form of a powder, a solution, or a slurry to a solution of aluminum or its compound. Further, the heating treatment of the phosphorus compound and heating for dissolution of aluminum may be carried out separately in form of solutions of them or may be carried out after mixing. Further, the step of removing water from the solution may be before mixing with the phosphorus compound or after mixing with the phosphorus compound.

The solution or slurry obtained by these steps can be used as a polycondensation catalyst and it is most desirable to separately produce the solution of aluminum or its compound and a solution of a phosphorus compound subjected to heating treatment and then mix the solutions.

By such a method, even if addition timing and point of the polycondensation catalyst in the polyester production process and properties of the polyester oligomer to be added are changed, it is made possible to obtain a polyester containing aluminum containing insoluble particles in the polyester in a desired range of the amount.

In the invention, it is preferable that the peaks of NMR spectrum of phosphorus atom bonded with hydroxyl group in the above-mentioned mixed solution are shifted to the higher magnetic field side and are wider than the peaks of NMR spectrum of phosphorus atom bonded with hydroxyl group in the solution containing the phosphorus compound alone before mixing the solutions. Further, it is a preferable embodiment that the integrated value of the peaks of NMR spectrum of phosphorus atom bonded with hydroxyl group is 10% or higher to the integrated value of NMR spectrum of phosphorus atom bonded with hydroxyl group in the solution containing the phosphorus compound alone before mixing the solutions. It is more preferably 15% or higher and even more preferably 20% or higher. If it is less than 10%, the effect of suppressing formation of insoluble particles in the polyester attributed to the aluminum polycondensation catalyst and the amount of the insoluble particles in the polyester inceases and in the case the polyester is molded to a molded article such as film or bottle, the haze of the molded article is deteriorated and therefore it is not preferable. Further, it also leads to a problem that filter clogging occurs frequently in filtration of the polyester in the polycondensation process and the molding process. The solvent of the above-mentioned mixed solution is preferable to contain 90% by mole or more of ethylene glycol.

A method of mixing the above-mentioned ethylene glycol solution of the aluminum compound and the phosphorus

compound solution is not particularly limited; it is preferable that the aluminum compound is dropped into the phosphorus compound solution under stirring. The conditions of addition are also not limited. In the case of phosphorus compound containing hydroxyl group, mixing at room temperature is preferable. On the other hand, in the case of an ester type phosphorus compound of which all of hydroxyl groups are esterified, heating is required since hydroxyl group formation has to be caused. The temperature of the heating is not particularly limited and it is preferably 50 to 200˚C. The conditions of the mixing are properly set depending on the structures of the phosphorus compound and the aluminum compound to be used. It is a preferable embodiment that the conditions are set by tracing the change of NMR spectrum after mixing both solutions and finding the mixing conditions satisfying the above-mentioned requirements. In the case of using phosphorus compound having no hydroxyl group, it is preferable to form hydroxyl group by heating ethylene glycol solution of phosphorus compound alone before the ethylene glycol solution of aluminum compound is added. Small amount of water may be added to promote the hydroxyl group formation in previous treatment.

In the case of mixing the ethylene glycol solution of the aluminum compound and the phosphorus compound, mixing ratio of the aluminum compound and the phosphorus compound is preferable to adjust the molar ratio of aluminum atom and phosphorus atom to satisfy the following inequality (1):

$$0.5 \leq P/Al \text{ (molar ratio)} \leq 20 \quad (1).$$

In the case the ratio exceeds the range of the inequality (1), the polycondensation catalyst activity is lowered and the effect of suppressing formation of insoluble particles in a polyester is lowered and therefore it is not preferable. P/Al (molar ratio) is preferably in a range from 0.8 to 10 and more preferably in a range from 1.0 to 5.

The shift of the peaks of NMR spectrum of phosphorus atom bonded with hydroxyl group to high magnetic field side by mixing ethylene glycol solution of aluminum compound and phosphorus compound solution is supposed to be caused by formation of complex by coordination of hydroxyl group of phosphorus compound to aluminum atom of aluminum compound.

A preservation method of the above-mentioned mixed solution of the aluminum compound and the phosphorus compound is also not limited. It is preferable to mix the solutions immediately before supply to polyester production process to make facility of tank for preservation unnecessary. Mixing method is not particularly limited and may include a method of mixing the solutions under stirring with stirring mixer, static mixer, or in supplying pipe after extruding prescribed amounts of the respective solutions by a quantitative pump.

In the case the solutions are supplied after being previously mixed, the mixed solution is preferable to be preserved at 10 to 45˚C, more preferably at 15 to 40˚C. In the case that mixed solution is preserved in higher temperature side than the above-mentioned temperature range, gelation of the aluminum compound or a complex of the aluminum compound and the phosphorus compound may possibly be caused and therefore it is not preferable. In the case that mixed solution is preserved in lower temperature side, because of precipitation of phosphorus compound, fluidity of the mixed solution is lowered and accordingly the quantitative supply to the polycondensation reaction system is decreased to result in undesirable consequence and therefore it is not preferable. Although the preservation method is not particularly limited, there is a method involving once taking out the solution obtained by mixing the ethylene glycol solution of the aluminum compound and ethylene glycol of the phosphorus compound at a prescribed mixing ratio for 30 minutes and preserving the solution in a thermostat tank or thermostat chamber in the above-mentioned temperature range.

In the invention, the mechanism of decrease of the content of the insoluble particles in a polyester by satisfying the above-mentioned requirements is not particularly clarified, It is supposed phenomenon is caused by the following reason: since coordination of the hydroxyl group of the phosphorus compound with the aluminum atom of the aluminum compound occurs and accordingly complex of the aluminum compound and the phosphorus compound is formed, formation of insoluble particles in polyester attributed to the aluminum compound can be suppressed.

As described, by the effect of the present inventions, conventional problem that the amount of insoluble particles in polyester considerably fluctuates in accordance with the difference of manufacturers of aluminum compounds and difference of lots is solved and without deterioration of the polycondensation activity and increase of the side reactions caused in polyester formation, the problem is solved and the quantity of insoluble particles in a polyester is constantly kept at low level.

Other metal components

The polymerization catalyst of the present inventions is preferable to be free from an alkali metal, an alkaline earth metal or their compounds.

On the other hand, it is a preferable embodiment in the present inventions that in addition to aluminum or its compound, a small amount of at least one compound selected from alkali metals, alkaline earth metals and compounds thereof is

made coexisting as second metal-containing component. Coexistence of the second metal-containing component is effective to enhance catalytic activity in addition to effect of suppressing formation of diethylene glycol and accordingly a catalyst component with high reaction speed is obtained and it is effective to improve the productivity.

A technology of obtaining a catalyst having sufficient catalytic activity by adding an alkali metal compound or an alkaline earth metal compound to an aluminum compound has been known. If such conventionally known catalyst is used, a polyester excellent in thermal stability can be obtained, however with respect to the conventional known catalyst using the alkali metal compound or the alkaline earth metal compound in combination, the addition amounts of them have to be high for obtaining practically applicable catalytic activity. In the case of using an alkali metal compound, polyester to be obtained is deteriorated in the resistance to hydrolysis and insoluble particles attributed to the alkali metal compound is increased, and therefore, yarn productivity and physical properties of yarn are decreased in the case the polyester is used for fibers or the film physical properties are decreased in the case the polyester is used for film. In the case an alkaline earth compound is used in combination, for obtaining practically applicable catalytic activity, it results in decrease of the thermal stability, considerable discoloration by heating, increase of formation amount of insoluble particles, and deterioration of the resistance to hydrolysis of obtained polyester.

In the case an alkali metal, an alkaline earth metal, or their compound is added, the use amount M (% by mole) is preferably $1\times10^{-6}$ or higher and less than 0.1% by mole, more preferably $5\times10^{-6}$ to 0.05% by mole, furthermore preferably $1\times10^{-5}$ to 0.03% by mole, and even more preferably $1\times10^{-5}$ to 0.01% by mole of the moles of the total polycarboxylic acid units composing the polyester. Since the addition amount of the alkali metal and the alkaline earth metal is low, it is possible to increase the reaction speed without causing problems of decrease of thermal stability, formation of insoluble particles, discoloration, and deterioration of resistance to hydrolysis. If the use amount M of the alkali metal, alkaline earth metal and compounds thereof exceeds 0.1% by mole, there occur cases in which decrease of thermal stability, increase of formation of insoluble particles and discoloration, and deterioration of resistance to hydrolysis which cause problems in product processing. If M is less than $1\times10^{-6}$, the effect of the addition is not clear.

The alkali metal and alkaline earth metal composing the second metal-containing component to be preferably used in addition to aluminum or its compound are preferably at least one kind selected from Li, Na, K, Rb, Cs, Be, Mg, Ca, Sr, and Ba and it is more preferable to use at least one selected from Li, Na, Mg and their compounds among them. Examples of compounds of alkali metals and alkaline earth metals may include metal salts of acid, alkoxides such as methoxide, ethoxide, n-propoxide, iso-propoxide, n-butoxide, and tert-butoxide, chelate compounds such as acetylacetonate, and hydrides, oxides, and hydroxides. Acid which comprise metal salts of acid include; saturated aliphatic carboxylic acid such as formic acid, acetic acid, propionic acid, butyric acid, and oxalic acid; unsaturated aliphatic carboxylic acid such as acrylic acid and methacrylic acid; aromatic carboxylic acid such as benzoic acid; halogen-containing carboxylic acid such as trichloroacetic acid; hydroxycarboxylic acid such as lactic acid, citric acid, and salicylic; inorganic acid such as carbonic acid, sulfuric acid, nitric acid, phosphoric acid, phosphonic acid, hydrogen carbonate, hydrogen phosphate, hydrogen sulfide, sulfurous acid, thiosulfuric acid, hydrochloric acid, hydrobromic acid, chloric acid, and bromic acid; organic sulfonic acid such as 1-propanesulfonic acid, 1-pentanesulfonic acid, and naphthalenesulfonic acid; organic sulfuric acid such as laurylsulfuric acid.

In the case of using those having high alkalinity like hydroxides among the alkali metal, the alkaline earth metal, and their compounds, since they tend to be difficult to be dissolved in organic solvent, for example diols such as ethylene glycol or alcohols, they have to be added in form of aqueous solution to the polymerization system and it may possibly cause a problem in the polymerization process. Further, in the case of using those having high alkalinity like hydroxides, the polyester become susceptive to the side reaction such as hydrolysis in polymerization and the polymerized polyester tends to become easy to be discolored and the hydrolysis resistance also tends to be lowered. Accordingly, those which are preferable as alkali metals and their compounds, or alkaline earth metals and their compounds of the invention are saturated aliphatic carboxylic acid salts, unsaturated aliphatic carboxylic acid salts, aromatic carboxylic acid salts, halogen-containing carboxylic acid salts, hydroxycarboxylic acid salts, inorganic acid salts selected from salts of sulfuric acid, nitric acid, phosphoric acid, phosphonic acid, hydrogen phosphate, hydrogen sulfide, sulfurous acid, thiosulfuric acid, hydrochloric acid, hydrobromic acid, chloric acid, bromic acid salts; organic sulfonic acid salts, organic sulfates, chelate compounds, and oxides of the alkali metals or alkaline earth metals. In terms of handling easiness and availability of them, saturated aliphatic carboxylic acid salts of the alkali metals or alkaline earth metals, particularly acetic acid salts, are preferable to be used.

Combination use with another catalyst

For polycondensation catalyst of the present inventions, co-presence of another polycondensation catalyst such as an antimony compound, a germanium compound, a titanium compound or the like to an extent that the addition of the component does not cause problems in the properties of the polyester, processibility and color tone of a product as described is effective to improve the productivity by shortening the polymerization time and therefore it is preferable. An antimony compound is preferable to be added in amount of 50 ppm or less on the basis of antimony atom in the

polyester to be obtained by polymerization. The addition amount is more preferably 30 ppm or less. If the addition amount of antimony exceeds 50 ppm, metal antimony precipitation occurs to cause gray discoloration and insoluble particles formation in polyester and therefore, it is not preferable.

A germanium compound is preferable to be added in an amount of 20 ppm or lower on the basis of germanium atom in the polyester to be obtained by polymerization. The addition amount is more preferably 10 ppm or less. If the addition amount of germanium exceeds 20 ppm, it results in disadvantage in terms of cost and therefore, it is not preferable.

A titanium compound is preferable to be added in an amount of 5 ppm or less on the basis of titanium atom in the polyester to be obtained by polymerization. The addition amount is more preferably 3 ppm or less, and even more preferably 1 ppm or less. If the addition amount of titanium exceeds 5 ppm, discoloration of the polyester becomes noticeable and also thermal stability is considerably deteriorated and therefore, it is not preferable.

Antimony compounds usable in the present inventions are not particularly limited and preferable examples may include antimony trioxide, antimony pentoxide, antimony acetate, and antimony glycoxide and particularly antimony trioxide is preferable to be used. Usable germanium compounds are also not particularly limited and examples may include germanium dioxide and germanium tetrachloride and germanium dioxide is particularly preferable. Both crystalline and amorphous germanium dioxides are usable.

Titanium compounds usable in the present inventions are not particularly limited and examples may include tetra-n-propyl titanate, tetraisopropyl titanate, tetra-n-butyl titanate, tetraisobutyl titanate, tetra-tert-butyl titanate, tetracyclohexyl titanate, tetraphenyl titanate, tetrabenzyl titanate, lithium oxalate titanate, potassium oxalate titanate, ammonium oxalate titanate, titanium oxide, composite oxide of titanium with silicon, zirconium, alkali metals, and alkaline earth metals, orthoesters or condensed orthoesters of titanium, reaction products of titanium orthoesters or condensed orthoesters with hydroxycarboxylic acids, reaction products of titanium orthoesters or condensed orthoesters with hydroxycarboxylic acids and phosphorus compounds, and reaction products of titanium orthoesters or condensed orthoesters with polyhydric alcohols having at least two hydroxyl groups, 2-hydroxycarboxylic acids, and basic groups and preferable examples among them are composite oxides of titanium and silicon, composite oxides of titanium and magnesium, and reaction products of titanium orthoesters or condensed orthoesters with hydroxycarboxylic acids and phosphorus compounds.

Examples of tin compounds are dibutyltin oxide, methylphenyltin oxide, tetraethyltin, hexaethylditin oxide, triethyltin hydroxide, monobutylhydroxytin oxide, triisobutyltin acetate, diphenyltin dilaurate, monobutyltin trichloride, dibutyltin sulfide, dibutylhydroxytin oxide, methylstannoic oxide, and ethylstannoic oxide and monobutylhydroxytin oxide is particularly preferable to be used.

For the purpose of improving color tone, it is a preferable embodiment that a cobalt compound is added in an amount of less than 10 ppm on the basis of cobalt atom in the polyester of the present inventions. The addition amount is more preferably 5 ppm or less and even more preferably 3 ppm or less. Cobalt compounds to be used are not particularly limited and practical examples are cobalt acetate, cobalt nitrate, cobalt chloride, cobalt acetylacetonate, and cobalt naphthenate and their hydrates. Cobalt acetate tetrahydrate is particularly preferable among them.

Process for producing polyester

Production of polyester of this invention can be carried out by a method involving conventionally known steps except that a polyester polymerization catalyst of the present inventions is used as catalyst. For example, in the case of producing PET, it is produced by a direct esterification method involving causing direct reaction of terephthalic acid and ethylene glycol and if necessary other copolymerizable components, distlling water for esterification, and following polycondensation under reduced pressure, or transesterification method involving reaction of dimethyl terephthalate and ethylene glycol and if necessary other copolymerizable components, distilling methyl alcohol for transesterification, and following polycondensation under reduced pressure. Further, if necessary, to increase limiting viscosity, solid phase polymerization may be carried out. To promote crystallization before solid phase polymerization, the melt polymerized polyester may be moisturized and then thermally crystallized or steam is directly blown to polyester chips and then thermal crystallization may be carried out.

The above-mentioned melt polymerization may be carried out by batch type reaction apparatus or continuous type reaction apparatus. In any of the above-mentioned methods, esterification reaction or transesterification reaction may be carried out in one step or in multi-steps. The melt polycondensation reaction may be carried out also in one step or in multi-steps. The solid-phase polymerization reaction is carried out, similarly to melt polycondensation reaction, by batch type reaction apparatus or continuous type reaction apparatus. The melt polycondensation and solid phase polymerization may be carried out continuously or separately. Hereinafter, one example of preferable production process by continuous manner will be described while using PET as an example.

At first low molecular weight polymer production by esterification reaction will be described. A slurry containing ethylene glycol in amount of 1.02 to 1.5 moles, preferably 1.03 to 1.4 moles, to 1 mole of terephthalic acid or its ester derivative is produced and the slurry is continuously supplied to the esterification reaction step.

The esterification reaction is carried out by using multi-step type apparatus comprising 1 to 3 esterification reactors joined in series in condition of ethylene glycol circulation while distlling water or alcohol produced by the reaction out of the reaction system by rectifying tower. The temperature of the first step esterification reaction is 240 to 270˚C, preferably 245 to 265˚C and the pressure is 0.2 to 3 $kg/cm^2G$, preferably 0.5 to 2 $kg/cm^2G$. The temperature of the last step esterification reaction is generally 250 to 290˚C, preferably 255 to 275˚C and the pressure is generally 0 to 1.5 $kg/cm^2G$, preferably 0 to 1.3 $kg/cm^2G$. In the case of carrying out the reaction in three or more steps, the reaction conditions of the esterification reaction in the middle stages are between the above-mentioned reaction conditions of the first step and the above-mentioned reaction conditions of the last step. To elevate the reaction rate of these esterification reactions, it is preferable to distribute them smoothly in the respective steps. It is preferable to raise the esterification reaction rate finally to 90% or higher and more preferable to increase to 93% or higher. A low level condensation product with molecular weight of about 500 to 5000 can be obtained by these esterification reactions.
In the case of using terephthalic acid as starting material in the above-mentioned esterification reactions, reaction may be carried out in absence of catalyst owing to the catalytic function of terephthalic acid as acid, however, it may be carried out in the presence of polycondensation catalyst.

It is preferable to carry out the reaction by adding small amount of a tertiary amine such as triethylamine, tri-n-butylamine, and benzyldimethylamine; a quaternary ammonium hydroxide such as tetraethylammonium hydroxide, tetra-n-butylammonium hydroxide, and trimethylbenzylammonium hydroxide; and a basic compound such as lithium carbonate, sodium carbonate, potassium carbonate, and sodium acetate, since ratio of dioxyethylene terephthalate component unit in the main chain of the polyethylene terephthalate can be kept at relatively low level (5% by mole or less in the total diol components).

In the case low molecular weight polymer is produced by transesterification reaction, solution containing ethylene glycol in an amount of 1.1 to 1.6 moles, preferably 1.2 to 1.5 moles, to 1 mole of dimethyl terephthalate is produced and the solution is continuously supplied to transesterification reaction step.
The transesterification reaction is carried out using apparatus comprising 1 or 2 transesterification reactors joined in series by distilling methanol produced by the reaction outside of the reaction system under refluxing of ethylene glycol by rectifying tower. The temperature of the first step transesterification reaction is 180 to 250˚C, preferably 200 to 240˚C. The temperature of the last step transesterification reaction is generally 230 to 270˚C, preferably 240 to 265˚C. As transesterification catalyst to be used are fatty acid salts and carbonate salts of metals such as Zn, Cd, Mg, Mn, Co, Ca, Ba and so on, and oxides of Pb, Zn, Sb, and Ge. Low level condensation product with molecular weight of about 200 to 500 can be obtained by these transesterification reactions.
In the case the production is carried out by transesterification reactions, a phosphorus compound is added on completion of the transesterification reactions to preferably deactivate the above-mentioned transesterification catalyst. The phosphorus compound to be used may be generally phosphoric acid, phosphorous acid, and their ester derivatives and the above-mentioned phosphorus compounds may be used.
In the invention the addition of the catalyst is not particularly limited in the addition timing if it is before the polycondensation step. In the case that there is much water-insoluble matter of an aluminum compound, it is preferable to add the aluminum compound in the initial stage of the esterification reaction, that is a stage in which the acid value ($AV_0$) of oligomer is 2000 to 5000 eq/ton. By the method, even if the aluminum compound contains much water-insoluble matter, the amount of aluminum containing insoluble particles in the obtained polyester can be reduced. In this case, a phosphorus compound may be added together with the aluminum compound or may be added separately or simultaneously, and it may be added separately after the aluminum compound addition before the polycondensation reaction.
In the invention, it is a preferable embodiment that mixed solution of the aluminum compound and the phosphorus compound is added on completion of the esterification reaction or transesterification reaction. The acid value ($AV_0$) of the oligomer in that case is not particularly limited and it is generally 100 to 800 eq/ton and preferably 400 to 700 eq/ton , more preferably 500 to 700 eq/ton. Consequently, the catalytic activity is guaranteed and a polymer having Tc1 of the polyester to be produced within a preferable range for forming the polyester can be obtained; for example, in the case the polyester is PET, a polymer having Tc1 within a range of 150 to 170˚C can be obtained stably. The solution is added before esterification reaction or transesterification reaction, the Tc1 becomes around 130˚C, which is almost same as that of PET obtained by using an antimony catalyst. Further, if the addition is carried out in the manner as described, it causes an effect to improve the insoluble particles formation because of the polycondensation catalyst. Although the cause of that is not particularly made clear, it is supposed to be owing to the side reaction of the phosphorus compound and slight change of the structure of the reaction product of the phosphorus compound and the aluminum compound.
In this connection, the catalyst may be added additionally in the polycondensation step, which is the next step.

An addition site and an addition method of the mixed solution are not particularly limited. For example, the solution may be added to transportation pipe from esterification reactor or transesterification reactor to polycondensation reactor or may be added in the polycondensation step. It is a preferable embodiment adding to in-line mixer installed in the transportation pipe from the esterification reactor or the transesterification reactor to the polycondensation reactor.

By the method, the added phosphorus compound is homogeneously mixed with the products of the esterification reaction or the transesterification reaction and the effect of the present inventions can more efficiently be caused and therefore, it is preferable. The structure of the in-line mixer to be employed in the present inventions is not particularly limited as long as the homogeneous mixing effect can be exhibited. For example, in-line mixer aiming to disperse and mix slurry and disclosed in JP H08-299771(A) is preferable.
To improve the insoluble particles formation or the transparency, it is preferable to stir the polymerization system at the time of adding the polymerization catalyst and from the viewpoint that the stirring is carried out sufficiently, addition to the in-line mixer is preferable.
In the case of addition to the polycondensation reactor, it is preferable embodiment to add the mixed solution by capsule addition method for adding the solution while enclosing the mixed solution in container made of the same polyester as that to be produced.
Further, since Tc1 alteration tends to be stabilized well by lowering the temperature in the polycondensation step after the addition of the mixed solution, the polycondensation step is preferable to be carried out at temperature as low as possible. Naturally, in the case of addition to the above-mentioned transportation pipe, the temperature of the addition position is also preferable to be lowered as much as possible.

The obtained low molecular weight condensation product is then supplied to the liquid-phase polycondensation step composed of multi-steps. With respect to the polycondensation reaction conditions, the temperature of the first step polycondensation reaction is 250 to 290˚C, preferably 260 to 280˚C and the pressure is 20 to 500 Torr, preferably 30 to 200 Torr. The temperature of the final step polycondensation reaction is 265 to 300˚C, preferably 275 to 295˚C and the pressure is generally 0.1 to 10 Torr, preferably 0.5 to 5 Torr. In the case of carrying out the reaction in three or more steps, the reaction conditions of the polycondensation reaction in the middle stages are between the above-mentioned reaction conditions of the first step and the above-mentioned reaction conditions of the final step. In the respective polycondensation reaction steps, the degree of the increase of the limiting viscosity to be reached is preferable to be distributed smoothly in the respective steps.
In the case low acetaldehyde content or low cyclic trimer content is required in the case of heat resistant hollow molded articles for low flavor beverages or mineral water, the polyester obtained by melt polycondensation is to be further subjected to solid-phase polymerization. The solid-phase polymerization of the polyester is carried out by conventional method. At first, the above-mentioned polyester to be supplied to the solid-phase polymerization is preliminarily crystallized at a temperature of 100 to 210˚C for 1 to 5 hours in an inert gas, reduced pressure, steam, or steam-containing inert gas atmosphere. Next, the solid-phase polymerization is carried out at 190 to 230˚C under an inert gas atmosphere or reduced pressure for 1 to 30 hours.
The catalyst of the present inventions has catalytic activity not only in the polycondensation reaction but also esterification reaction and transesterification reaction. For example, the catalyst of the present inventions can be used transesterification reaction of a dicarboxylic acid alkyl ester such as dimethyl terephthalate and glycol such as ethylene glycol. The catalyst of the present inventions further has catalytic activity not only in the melt polymerization reaction but also solid phase polymerization and solution polymerization, and a polyester can be produced by any method.

Properties of polyester

A polyester of the present inventions is preferable to be polyesters containing aluminum containing insoluble particles in the polyesters in an amount of 3500 ppm or lower which is quantitatively measured by the evaluation method described in Examples.
The aluminum containing insoluble particles is preferably 2500 ppm or lower. It is more preferably 1500 ppm or lower. It is furthermore preferably 1000 ppm or lower. In the case the amount of the aluminum containing insoluble particles in polyesters exceeds 3500 ppm, because of insoluble fine particles in polyesters, the haze of a molded article is undesirably deteriorated in the case of molding the polyesters into films or bottles. It also leads to a problem that filter clogging occurs frequently at the time of filtration of the polyester in the polycondensation process and the molding process. A method for suppressing the aluminum containing insoluble particles in polyesters to 3500 ppm or lower may be achieved by appropriately employing the above-mentioned catalyst production method, addition timing, and addition method.
The amount of the aluminum containing insoluble particles in polyesters is no more than a conversion value and in terms of the content in the total amount of the polyesters subjected to the above-mentioned evaluation, it become only an extremely slight amount in ppb level. It is supposed that the reason for deterioration of the transparency of a molded article by such an extremely small amount of the insoluble particles is attributed to that because the aluminum containing insoluble particles in the polyesters subjected to the above-mentioned evaluation method has poor affinity to the polyesters, voids are formed in the interface of the polyesters and the aluminum containing insoluble particles due to the molding stress at the time of molding and light scattering is caused by the voids to result in decrease of the transparency of the molded article.

A polyester of the present inventions is preferable to have a haze value of 2% or lower evaluated by the evaluation method shown in Examples when being formed into a monoaxially oriented film.
The haze value is more preferably 1.8% or lower and even more preferably 1.6% or lower. In the case the haze value exceeds 2%, it is sometimes impossible to obtain a molded article with high transparency, with respect to a molded article such as a film or a bottle obtained by molding involving drawing and therefore it is not preferable.
In the present inventions, a method for suppressing the haze value of the monoaxially oriented film to 2% or lower is not particularly limited, however the haze value is considerably affected by the aluminum containing insoluble particles in polyesters and Tc1 and therefore it is preferable to optimize these property values.
To mold the polyester of the present inventions into a film, it is sometimes required to provide electrostatic adhesion property. Therefore, the polyester is preferable to satisfy the following constitutions and characteristic properties. In this case, the polyester is preferable to contain aluminum element, alkaline earth metal element, alkali metal element, and phosphorus element and further preferable to satisfy the following characteristics (1) to (4):

(1) $3 \leq Al \leq 200$ wherein Al denotes aluminum element content (ppm) in the polyester,
(2) $0.5 \leq A \leq 50$ wherein A denotes alkali metal element content (ppm) in the polyester,
(3) $3 \leq AA \leq 200$ wherein AA denotes alkaline earth metal element content (ppm) in the polyester, and
(4) $0.10 \leq$ (phosphorus element)/(aluminum element + alkaline earth metal element (atomic ratio)) $\leq 2.0$ wherein phosphorus element, aluminum element, and alkaline earth metal element denote their contents in the polyester.

Also, the polyester is preferable to satisfy that

(5) the melt specific resistance of the polyester is $1.0\times10^8\Omega\cdot cm$ or lower and further that
(6) the aluminum containing insoluble particles in the polyester is 3500 ppm or lower and further that
(7) the haze value of the monoaxially oriented film produced from the polyester is 2.0% or lower.

The content of aluminum element in the polyester is more preferably 5 to 100 ppm, furthermore preferably 7 to 80 ppm, and even more preferably 10 to 60 ppm. If the content of aluminum element is less than 3 ppm, the polycondensation catalytic activity is lowered and therefore it is not preferable. On the contrary, if it exceeds 200 ppm, the polycondensation catalytic activity reaches the plateau and formation amount of the insoluble particles attributed to the aluminum element in the polyester is increased, and therefore it is not preferable.
The content of alkali metal element in the polyester is more preferably 1 to 40 ppm, furthermore preferably 2 to 30 ppm, and even more preferably 3 to 20 ppm. In the case of the content of alkali metal element is less than 0.5 ppm, decrease of melt specific resistance of the polyester is not satisfactory and the electrostatic adhesion property is deteriorated. Further the condensation reaction of glycol components, which is side reaction, is increased to result in increase of diethylene glycol, as byproduct, in the case ethylene glycol is used as glycol component. Due to the increase of the byproduct, deterioration of properties such as the lowering of the melting point and the thermal oxidation stability of the polyester is caused and therefore, it is not preferable. On the contrary, if it exceeds 50 ppm, the effect to suppress the decrease of melt specific resistance of the polyester and the condensation reaction of glycol components reaches the plateau and discoloration of the polyester is increased and color tone is lowered, and therefore it is not preferable.
The content of alkaline earth metal element in the polyester is more preferably 5 to 160 ppm, furthermore preferably 10 to 120 ppm, and even more preferably 15 to 100 ppm. In the case that the content of alkaline earth metal element is less than 3 ppm, decrease of melt specific resistance of the polyester is not satisfactory and the electrostatic adhesion property is deteriorated, therefore it is not preferable. On the contrary, if it exceeds 200 ppm, the stability such as thermal stability of the polyester is lowered and discoloration of the polyester is increased , therefore it is not preferable.
The (phosphorus element)/(aluminum element + alkaline earth metal element) (atomic ratio) is more preferably 0.15 to 1.9, furthermore preferably 0.20 to 1.8, and even more preferably 0.25 to 1.7. If the (phosphorus element)/(aluminum element + alkaline earth metal element)(atomic ratio) is less than 0.10, the polycondensation catalytic activity of the polyester is decreased and therefore it is not preferable. On the contrary, if the (phosphorus element)/(aluminum element + alkaline earth metal element)(atomic ratio) exceeds 2.0, decrease of melt specific resistance of the polyester is not satisfactory and the electrostatic adhesion property is deteriorated, therefore it is not preferable.
The melt specific resistance of the polyester is more preferably $0.8\times10^8\Omega\cdot cm$ or lower, further more preferably $0.5\times10^8\Omega\cdot cm$ or lower, and even more preferably $0.3\times10^8\Omega\cdot cm$ or lower. In the case the melt specific resistance of the polyester is higher than $1\times10^8\Omega\cdot cm$, the electrostatic adhesion property is deteriorated and the casting speed is retarded to result in low productivity. Herein, the melt specific resistance has correlation with the highest casting speed at which casting can be carried out while suppressing pinnables in the electrostatic adhesion casting method, that is, the electrostatic adhesion property. As a polymer has lower melt specific resistance, casting can be carried out at a higher speed and it is therefore very important in terms of the film productivity.
The haze value of the monoaxially oriented film is more preferably 1.8% or lower, furthermore preferably 1.6%

or lower, and even more preferably 1.4% or lower.
In the case the haze value exceeds 2%, it becomes impossible to obtain a molded article of high transparency such as film or bottle obtained by molding accompanied with drawing.
By satisfying the above-mentioned constitutions and properties simultaneously, a molded article with little insoluble particles derived from the polycondensation catalyst, excellent in the electrostatic adhesion property, and having high transparency can be obtained and further a polyester with good color tone and stability can be obtained. And accordingly, the polyester can be used preferably as starting material for wrapping films, industrial films, optical films, films for magnetic tapes, photographic films, films for can laminates, films for capacitors, thermally shrinkable films, gas barrier films, white color films, and easy-to-cut films. Also, the polyester can be applied to sheets to be used as trays and containers for food products and miscellaneous goods, cups, blister packs, carrier tapes for electronic parts, and trays for electronic part delivery while being processed by vacuum molding, compressed air molding, and die pressing.

The polyester in the present inventions include products composed of one or more kinds of polycarboxylic acids including dicarboxylic acid and their ester-formable derivatives and one or more kinds of polyhydric alcohols including glycol; products composed of hydroxycarboxylic acids and their ester-formable derivatives; and products composed of cyclic esters.
Examples of dicarboxylic acid may include saturated aliphatic dicarboxylic acids such as oxalic acid, malonic acid, succinic acid, gluratic acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimeric acid and their ester-formable derivatives; unsaturated aliphatic dicarboxylic acids such as fumaric acid, maleic acid, and itaconic acid and their ester-formable derivatives; and aromatic dicarboxylic acid such as orthophthalic acid, isophthalic acid, terephthalic acid, 5-(alkali metal) sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4'-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracenedicarboxylic acid and their ester-formable derivatives.
Terephthalic acid and naphthalenedicarboxylic acid, particularly 2,6-naphthalenedicarboxylic acid, among these dicarboxylic acids are preferable in terms of the physical properties of the polyester to be obtained, and if necessary, other dicarboxylic acids may be used as constituent components. Terephthalic acid and naphthalenedicarboxylic acid are preferably 70% by mole or higher in the total acid components, more preferably 80% by mole or higher, and even more preferably 90% by more or higher.
Examples of polycarboxylic acids other than these dicarboxylic acids may include ethanetricarboxylic acid, propanetricarboxylic acid, butanetetracarboxylic acid, pyromellitic acid, trimellitic acid, trimesic acid, 3,4,3',4'-biphenyltetracarboxylic acid, and their ester-formable derivatives.

Examples of glycol may include aliphatic glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanddiethanol, 1,10-decamethylene glycol, 1,12-dodecanediol, polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl) ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols.
Among these glycols are ethylene glycol, 1,3-propylene glycol, 1,4-butylene glycol, and 1,4-cyclohexanedimethanol preferable. These preferable glycols are adjusted preferably at 70% by mole or higher in the total glycol components, more preferably 80% by mole or higher, and even more preferably 90% by more or higher.
Examples of polyhydric alcohols other than these glycols are trimethylolmethane, trimethylolethane, trimethylolpropane, pentaerythritol, glycerol, and hexanetriol.
Examples of hydroxycarboxylic acids may include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid and their ester-formable derivatives.
Examples of the cyclic esters may include ε-caprolactone, β-propiolactone, β-methyl-β-propiolactone δ-valerolactone, glycollide, and lactide.
Examples of the ester-formable derivatives of the polycarboxylic acids and hydroxycarboxylic acids are their alkyl esters and acid chlorides, and acid anhydrides.

The polyester of the present inventions are preferably polyethylene terephthalate, polybutylene terephthalate, polypropylene terephthalate, poly(1,4-cyclohexanedimethylene terephthalate), polyethylene naphthalate, polybutylene naphthalate, polypropylene naphthalate, and their copolymers and among them, polyethylene terephthalate and their

copolymers are particularly preferable. As the copolymer, those which contain 60% by mole or more and preferably 70% by mole or more of the above-mentioned repeating units are preferable. Copolymers consisting of 30 to 85% by mole of ethylene glycol and 15 to 30% by mole of 1,4-cyclohexanedimethanol to 100% by mole of terephthalic acid are also preferable.
After the polyester polymerization is carried out by the process of the present inventions, the catalyst is removed from the polyester or the catalyst is inactivated by adding a phosphorus compound to further heighten the thermal stability of the polyester.

Additive for polyester

The polyester of the present inventions may contain an organic, inorganic, or organometal type toner and an optical brightener and one or more kinds of these additives may be added to suppress the discoloration such as yellow discoloration or the like of the polyester to the further excellent level. Further, the polyester may contain other optional polymers, a charge controlling agent, a defoaming agent, a dyeing property improver, a dye, a pigment, a flatting agent, an optical brightener, a stabilizer, an antioxidant, and other additives. Examples usable as the antioxidant may be aromatic amine antioxidants and phenol antioxidants and examples usable as the stabilizer are phosphorus compounds such as phosphoric acid and phosphoric acid esters, sulfur containing stabilizers, and amine stabilizers.
These additives may be added at any stage in polymerization of the polyester, after the polymerization, or molding of the polyester and which stage is preferable differs depending on the properties of compounds and required properties and functions of polyester molded articles.
The polyester obtained by polymerization using the polyester polymerization catalyst of the present inventions may be subjected to fiber production by a conventional melt spinning method. With respect to the fiber, various technnology of obtaining full-dull fibers or semi-dull fibers by adding a pigment such as titanium oxide; making dyeing easy by copolymerizing a sulfoisophthalic acid salt; providing non-flammability by copolymerizing a phosphorus type monomer; or the like can be employed.

Use of polyester

The polyester of the present inventions can be used as hollow molded articles such as beverage containers for mineral water, juices, wines, and whisky; feeding bottles; containers for bottled food; containers for hair care products and cosmetics; and containers for detergents for domestic cleaning and washing dishes.
The polyester of the present inventions can be formed into sheet-like products by an extruder to obtain sheets. Such sheets may be used also for trays and containers for food products and miscellaneous goods, cups, blister packs, carrier tapes for electronic parts, and trays for electronic part delivery while being processed by vacuum molding, compressed air molding, and die pressing. The sheets can be utilized as various cards as well.
The polyester obtained by using the polyester polymerization catalyst of the present inventions can be used in form of un-drawn films or biaxially drawn oriented films. In the case of films, particles of silica or the like may be added to provide slipping property.
The polyester films may be used preferably for antistatic films, easily adhesive films, cards, dummy cans, agriculture uses, construction materials, decorative materials, wall paper, OHP films, printing, ink jet recording, sublimation transfer recording, recording by laser beam printers, electrophotographic recording, thermal transfer recoding, printed substrate wiring, membrane switches, plasma display, touch panels, masking films, photographic plate-making, roentgen films, photographic negative films, phase different films, polarization films, polarization film protection (TAC), protect films, photosensitive resin films, visible field magnifying films, diffusion sheets, reflection films, reflection prevention films, conductive films, separators, ultraviolet protection, and back grind tapes.
In the case of production of such hollow molded articles, sheets, and films, waste resins generated in the production process and polyester resins recovered from markets may be mixed. Even if polyester resins of the present inventions are such recycled resins, the resins are scarcely deteriorated and suitable for providing high quality molded articles.
Further, the polyester of the present inventions may have multilayer structure comprising gas barrier resin layer of such as polyvinyl alcohol, polymethaxylylene diamineadipate or the like, a light-shielding resin layer, or recycled polyester layer for interlayer. Also, the polyester may be coated with a metal such as aluminum or a layer of aluminum oxide, silicon oxide, aluminum oxide/silicon oxide binary substance, or diamond-like carbon by method such as deposition or CVD (chemical vapor deposition). Also, in order to improve the crystallinity in the case of hollow molded articles or sheets, other resins such as polyethylene and inorganic nucleating agent such as talc may be added.

Examples

Hereinafter, the present inventions will be explained with reference to examples; however it is not intended

that the present inventions be limited to the illustrated examples. The evaluations were carried out by the following methods.

(1) Measurement of amount of water-insoluble matter of aluminum compound

30 g of aluminum compound was added to 1500 ml of pure water at room temperature stirring at 200 rpm and continuously stirred for 6 hours. Successively, the solution temperature was raised to 95˚C, and stirring was continued at the temperature further for 3 hours to dissolve the aluminum compound. The obtained solution was cooled until the temperature turned back to room temperature and filtered by membrane filter (cellulose acetate membrane filter, trade name: C020A047A, manufactured by Advantec) with pore diameter of 0.2 $\mu$m and washed with 50 ml of pure water. The obtained filter with which the insoluble matter was separated was dried by vacuum dryer at 60˚C for 12 hours to measure the insoluble matter weight (W). The water-insoluble matter of the aluminum compound with respect to water was calculated according to the following equation. In the case the aluminum compound is an aqueous solution, some of the aqueous solution was sampled, and evaporated and dried to measure the solid matter in the aqueous solution. The solid matter was regarded as the weight of the aluminum compound and the aluminum compound concentration in the aqueous solution was calculated and the aqueous solution in amount equivalent to 30 g of the aluminum compound in the aqueous solution was filtered to measure the weight of the insoluble matter of the aluminum compound. In the case of the aqueous solution, if the aluminum compound concentration in the aqueous solution was higher than 2% by weight, pure water was added so as to dilute the aluminum and adjust the concentration to be 2% by weight and then filtration was carried out. The dilution was carried out in the same conditions as those in the case of above-mentioned solid aluminum compound dissolution. The above-mentioned operation was carried out in a clean bench.

$$\text{Insoluble matter (ppm)} = [W(mg)/30000\ (mg)]\times 10^6$$

(2) Measurement of NMR spectrum of ethylene glycol solution of aluminum compound The NMR spectrum of an ethylene glycol solution of an aluminum compound was measured by the following method.

Sample: an ethylene glycol solution of an aluminum compound (concentration: 2.65 g/l on the basis of aluminum element)

Apparatus: Fourier nuclear magnetic resonance apparatus (AVANCE 500, manufactured by BRUKER)

Measurement solution: to 80 parts by volume of a sample, 20 parts by volume of heavy hydrogenated dimethyl sulfoxide was added.

| | |
|---|---|
| $^{27}$Al resonance frequency: | 130.33 MHz |
| Flip angle of detection pulse: | 90˚ |
| Data intake time: | 1.0 second |
| Delay time: | 1.0 second |
| Proton decoupling: | none |
| Integration times: | 500 to 1000 times |
| Measurement temperature: | room temperature |

On the other hand, the peak integration value measured using a 1.3 mmol/L heavy aqueous solution of aluminum chloride hexahydrate ($AlCl_3.6H_2O$) in the above-mentioned conditions was employed as a standard 1.0 and the ratio of the integration value of the peaks appearing in -15 to 30 ppm of an ethylene glycol of an aluminum compound measured by the above-mentioned manner to the standard was shown.

(3) Measurement of NMR spectrum of mixed solution of aluminum compound and phosphorus compound

Apparatus: Fourier nuclear magnetic resonance apparatus (AVANCE 500, manufactured by BRUKER)

Measurement solution: to 80 parts by volume of a sample, 20 parts by volume of heavy hydrogenated dimethyl sulfoxide was added.

| | |
|---|---|
| $^{31}$P resonance frequency: | 202.47 MHz |
| Flip angle of detection pulse: | 45˚ |
| Data intake time: | 2.0 seconds |
| Delay time: | 0.5 second |
| Proton decoupling: | complete decoupling of proton |
| Integration times: | 2000 to 10000 times |
| Measurement temperature: | room temperature |

(4) Measurement of acid value AVo of oligomer
Without being subjected to drying, an oligomer was milled by handy mill (pulverizer). A sample in amount 1.00 g was accurately weighed and mixed with 20 ml pyridine. Several boiling stones were added and the sample was dissolved by boiling for 15 minutes. Immediately after the boiling, 10 ml of pure water was added and the resulting solution was cooled to room temperature. The sample was titrated with N/10-NaOH aqueous solution using phenolphthalein as indicator. Blank sample free of oligomer was also examined according to the same procedure. If oligomer was not dissolved in pyridine, it was examined in benzyl alcohol. The AVo (eq/ton) was calculated according to the following equation.

$$AVo = (A - B) \times 0.1 \times f \times 1000/W$$

(A = titration amount (ml); B = titration amount for blank (ml); f = N/ 10-NaOH factor; and W = weight of sample (g)).
(5) Measurement of hydroxyl value OHVo of oligomer
Without being subjected to drying, oligomer was milled by handy mill (a pulverizer). A sample in amount 0.50 g was accurately weighed and mixed with 10 ml of an acetylation agent (0.5 mole/L of acetic anhydride-pyridine solution) and immersed in water bath at 95˚C or higher for 90 minutes. Immediately after the sample was taken out of the water bath, 10 ml of pure water was added and cooled to room temperature. The sample was titrated with N/5-NaOH-$CH_3OH$ solution using phenolphthalein as indicator. Blank sample free of oligomer was also examined according to the same procedure. Beforehand, 20 ml of N/10-hydrochloric acid was titrated with the N/5-NaOH-$CH_3OH$ solution using phenolphthalein as indicator and N/5-NaOH-$CH_3OH$ solution to calculate the factor (F) of the solution.

$$F = 0.1 \times f \times 20/a$$

(f = factor of N/10-hydrochloric acid; a = titration amount (ml)) OHVo (eq/ton) was calculated according to the following equation.

$$OHVo = \{(B - A) \times F \times 1000/W\} + AVo$$

(A = titration amount (ml); B = titration amount for blank (ml); F = factor of N/5-NaOH-$CH_3OH$ solution; and W = weight of sample (g)).

(6) Intrinsic viscosity (IV: dl/g)
Polyester pellets (length about 3 mm, diameter about 2 mm, cylinder-like shape) obtained by melt polycondensation and solid-phase polycondensation were dissolved in solvent mixture of phenol/1,1,2,2-tetrachloroethane at 6/4 (weight ratio) at 80 to 100˚C for a few hours and the viscosity was measured using Ubbelohde's viscometer at 30˚C. Measurement was carried out at a few concentrations around 4 g/l and IV was determined according to conventional method.
(7) Color tone
Using polyester resin chip (length about 3 mm, diameter about 2 mm), Hunter's L value and b value were measured by colorimeter (ND-1001DP, manufactured by Tokyo Denshoku Co., Ltd.).
(8) Quantitative determination of diethylene glycol (DEG) in polyester
After 0.1 g of a polyester was thermally decomposed at 250˚C in 2 mg methanol, separate quantitative determination was carried out by gas chromatography.
(9) Measurement of Tc1
Measurement was carried out using DSC 50 manufactured by Shimadzu Corporation. A polyester in amount of 10.0 mg was put on a pan made of aluminum and heated from room temperature to 300˚C at heating rate of 20˚C/min in nitrogen atmosphere and after it reached 300˚C, the pan was kept for 3 minutes and immediately taken out and quenched in liquid nitrogen. The droplets deposited on the surface were removed by blowing air by air nozzle. After that, the pan made of aluminum and containing the sample was heated again from 25˚C to 300˚C at heating rate of 20˚C/min to calculate the crystallization temperature (Tc1) in the case of temperature rise. The temperature of

the maximum part of the heat generation peak was defined as Tc1.
(10) Evaluation of aluminum containing insoluble particles in polyester
Polyester pellets produced by melt polycondensation in an amount 30 g and a mixed solution of p-chlorophenol/tetrachloroethane (3/ 1: ratio by weight) in amount of 300 ml were put in round bottom flask equipped with stirrer, and the pellets were stirred and dissolved in the mixed solution at 100 to 105˚C for 2 hours. The obtained solution was cooled to room temperature and the entire amount of the solution was filtered for separating insoluble particles by polytetrafluoroethylene membrane filter (PTFE membrane filter, trade name: T100A047A, manufactured by Advantec) of diameter 47 mm/hole diameter 1.0 μm under pressure of 0.15 MPa with effective filtration diameter of 37.5 mm. On completion of filtration, the filtrate was successively washed with 300 ml of chloroform and then dried overnight at 30˚C in reduced pressure. The filtration face of the membrane filter was analyzed by scanning x-ray fluorescence spectrometer (ZSX 100e, Rh bulb 4.0 kW, manufactured by Rigaku Corporation) for quantitative measurement of aluminum element amount. The quantitative measurement was carried out for the portion with diameter of 30 mm in the center part of the membrane filter. Aluminum element amount was obtained by using polyethylene terephthalate resin whose calibration curve for the x-ray fluorescence spectrometry are known and the apparent aluminum element amount was exhibited by ppm. The measurement was carried out at 50 kV-70 mA x-ray output and using pentaerythritol as spectrometric crystal and PC (proportional counter) as detector in condition of PHA (pulse-height-analyzer) 100 to 300. The aluminum element amount of the polyethylene terephthalate resin for the calibration curve was quantitatively measured by inductively coupled plasma-atomic emission spectrometry.
In the present inventions, the aluminum containing insoluble particles in the polyester measured by the above-mentioned evaluation method is preferably 3500 ppm or less on the basis of apparent aluminum element amount, more preferably 2000 ppm or less, and even preferably 1000 ppm or less. If it exceeds 3500 ppm on the basis of apparent aluminum element amount, the content of ultra small insoluble particles in the polyester is so high as to frequently cause problems that the haze of a molded article is worsened in the case the polyester is molded into a molded article, for example, film or bottle and that the filter clogging occurs at the time of filtration of the polyester in the polymerization step or the molding step, therefore it is not preferable.

(11) Quantitative measurement of alkali metal
Polyester was dissolved in o-chlorophenol and extracted with 0.5 N hydrochloric acid solution and the measurement was carried out by atomic absorption spectrometry and % by weight of the alkali metal content was shown. In the case of laminate film, the respective layers were separated by peeling or the like and measurement was carried out.
(12) Quantitative measurement of phosphorus, aluminum, and alkaline earth metal Specimen was produced by melting polyester at melting point + 20˚C in circular ring with a thickness of 5 mm and inner diameter of 50 mm and made of stainless and the element amounts were measured by x-ray fluorescence spectrometry and shown by ppm. In the case of determination of the amounts, calibration curve was previously formed by using samples in which the respective element amounts were known and employed for the measurement.
(13) Specific resistance of polymer melt (ρi)
Electric current value (io) was measured by putting two electrode plates in polyester melted at 275˚C and applying voltage of 120V and the specific resistance value ρi was calculated according to the following equation.

$$\rho i\ (\Omega\cdot cm) = A/I \times V/i_0$$

wherein A = electrode surface area ($cm^2$); I = interval between electrodes (cm); V = voltage (V).
(14) Haze value of monoaxially oriented film
Polyester resin was dried at 130˚C for 12 hours in vacuum and processed by heat press method to obtain sheet of 1000 ± 100 μm. The heat press temperature, pressure, and time were adjusted to be 320˚C, 100 $kg/cm^2$G, and 3 seconds, respectively. After pressing, the sheet was thrown into water and quenched. The obtained sheet was monoaxially drawn to 3.5 times by batch type drawing machine (FILM STRETCHER, manufactured by T. M. LONG CO., INC) to obtain monoaxially oriented film of 300 ± 20 μm. The drawing temperature is controlled to be blow temperature 95˚C/plate temperature 100˚C. The drawing speed was adjusted to be 15,000%/min. The haze of the monoaxially oriented film was measured by using haze meter (300A, manufactured by Nippon Denshoku Kogyo Co., Ltd.) according to JIS-K7136. The measurement was repeated 5 times and the average value was calculated. The haze value was shown as conversion value calculated by assuming the film thickness to be 300 μm.

(15) Molding hollow molded article

A polyester was dried by dryer using dehumidified nitrogen and preform was molded by extrusion molding apparatus (M-150C (DM), manufactured by Kakuki Seisakusho) at resin temperature of 295˚C. The mouth plug part of the preform was thermally crystallized by mouth plug part crystallization apparatus manufactured by our company and then biaxially blow-molded by LBO1E drawing blow molding apparatus manufactured by Corp. Plast and successively thermally fixed in die set at about 140˚C for about 7 seconds to obtain hollow molded article with 1500 cc capacity (the trunk part was circular).

(16) Transparency evaluation of hollow molded article

The transparency of the hollow molded article obtained in the above described molding process by the method (2) was evaluated by eye observation according to the three-grade evaluation criteria shown below.

○: excellent in transparency

Δ: slightly inferior in transparency .

×: inferior in transparency

(Preparation Example 1 of aluminum compound)

Together with 20 g/l of aqueous solution of basic aluminum acetate (hydroxyaluminum diacetate; manufactured by Aldrich, water-insoluble matter 400 ppm), equimolecular amount (by volume) of ethylene glycol was loaded into flask and stirred at room temperature for 6 hours and then stirred at 70 to 90˚C for a few hours under reduced pressure (133 Pa) for removing water from the system to obtain an ethylene glycol solution containing 20 g/l aluminum compound.

(Preparation Example 1 of phosphorus compound)

Together with ethylene glycol, Irganox 1222 (manufactured by Ciba Specialty Chemicals K.K.) as phosphorus compound defined by (Formula 39) was loaded into flask and heated at 160˚C for 12 hours stirring in nitrogen flow current to obtain ethylene glycol solution containing 30 g/l phosphorus compound.

(Preparation Example 1 of mixture of (ethylene glycol solution of aluminum compound)/(ethylene glycol solution of phosphorus compound))

The respective ethylene glycol solutions obtained in the above-mentioned Preparation Example 1 of aluminum compound and Preparation Example 1 of phosphorus compound were loaded into flask and mixed at proper mole as to adjust molar ratio of aluminum atom and phosphorus atom to be 1 : 2 and stirred for 1 day to obtain catalyst solution.

(Preparation Example 2 of mixture of (ethylene glycol solution of aluminum compound)/(ethylene glycol solution of phosphorus compound))

Those obtained in the above-mentioned Preparation Example 1 of mixture of (ethylene glycol solution of aluminum compound)/(ethylene glycol solution of phosphorus compound) were loaded into flask and heated to 160˚C stirring in nitrogen flow and the mixed solution was kept for 30 minute as it was and then cooled to about 40˚C to obtain polymerization catalyst for polyester. (Preparation Example 3 of mixture of (ethylene glycol solution of aluminum compound)/(ethylene glycol solution of phosphorus compound))

The phosphorus compound solutions prepared by the method in Preparation Example 1 of phosphorus compound and aluminum acetylacetonate were loaded into flask and mixed at proper mole as to adjust molar ratio of aluminum atom and phosphorus atom to be 1 : 2 and heated at 100˚C for 1 hour stirring in nitrogen flow to obtain catalyst solution.

(Preparation Example 4 of mixture of (ethylene glycol solution of aluminum compound)/(ethylene glycol solution of phosphorus compound))

Those obtained in the above-mentioned Preparation Example 1 of mixture of (ethylene glycol solution of aluminum compound)/(ethylene glycol solution of phosphorus compound) was loaded into flask and heated to 160˚C stirring without replacement with nitrogen and was kept for 30 minute as it was and then cooled to about 40˚C to obtain polymerization catalyst for polyester.

(Example A-1)

2 L stainless steel autoclave equipped with stirrer was charged with high purity terephthalic acid and ethylene

glycol in amount 2 times as much by mole of terephthalic acid, and triethylamine in an amount of 0.3% by mole to the amount of the acid component was added. Under distilling water from the reaction system, esterification reaction was carried out at 250˚C in pressurized condition of 0.25 MPa to obtain mixture of bis(2-hydroxyethyl) terephthalate at about 95% esterification and oligomer (hereinafter referred to as BHET mixture). As polycondensation catalyst, the polymerization catalyst of "Preparation Example 1 of mixture of (ethylene glycol solution of aluminum compound)/(ethylene glycol solution of phosphorus compound)" was used and added in amount as to adjust the aluminum atom and phosphorus atom ratios to be 0.014% by mole and 0.028% by mole to the acid component of the polyester and successively the mixture was stirred at 250˚C in atmospheric pressure and nitrogen atmosphere for 10 minute. After that, the mixture was heated to 280˚C in 60 minutes while the pressure of the reaction system was gradually decreased to 13.3 Pa (0.1 Torr) and polycondensation reaction was carried out further at 280˚C and 13.3 Pa. The pressure was released and successively, the resin under slightly pressurizing condition was extruded into strand-like form to cold water for quenching and then kept for 20 seconds in the cold water and after that, the resulting product was cut into a size of about 3 mm length and about 2 mm diameter to obtain cylindrical pellets. The time (polymerization time) taken for polycondensation reaction and the IV of the polyester are shown in Table 1.
After the polyester pellets obtained by melt polymerization was vacuum dried (13.3 Pa or lower, 80˚C, 12 hours), successively crystallization treatment (13.3 Pa or lower, 130˚C, 12 hours and 13.3 Pa or lower, 160˚C, 3 hours) was carried out. After cooling, the polyester pellets were subjected to solid-phase polymerization by solid-phase polymerization reactor while the system was kept at 13.3 Pa or lower and 215˚C to obtain polyester pellets having IV of 0.78 dl/g. Next the transparency and insoluble particles evaluation results of the obtained hollow product by the above described (2), (3), and (4) are shown in Table 1.

(Examples A-2 to A-9 and Comparative Examples A-1 and A-2)

The same process was carried out as Example A-1, except that the conditions were changed as shown in Table 1. In Example 6, an ethylene glycol solution of 50 g/l of magnesium acetate tetrahydrate was further added as a polymerization catalyst in an amount of 0.01 mol% on the basis of magnesium atom to the acid component and in Comparative Example 2, no aluminum catalyst was used and as a polycondensation catalyst, an ethylene glycol solution of antimony trioxide was added in amount of 0.04% by mole on the basis of antimony atom to the acid component in the polyester.

**Table 1**

| Example | Catalyst addition amount (mol%) | Phosphorus compound type | Catalyst preparation example No. | Polymerization time | IV (dl/g) | Transparency of hollow molded article | Al containing insoluble particles Al (ppm) |
|---|---|---|---|---|---|---|---|
| Example A-1 | Al/P=0.014/0.028 | Formula 39 | 1 | 80 | 0.62 | ○ | 350 |
| Example A-2 | Al/P=0.014/0.028 | Formula 39 | 2 | 75 | 0.61 | ○ | 370 |
| Example A-3 | Al/P=0.014/0.028 | Formula 21 | 1 | 76 | 0.60 | ○ | 450 |
| Example A-4 | Al/P=0.014/0.028 | Formula 24 | 1 | 77 | 0.61 | ○ | 280 |
| Example A-5 | Al/P=0.014/0.028 | Formula 25 | 1 | 75 | 0.61 | ○ | 510 |
| Example A-6 | Al/P/Mg 0.014/0.028/0.01 | Formula 39 | 1 | 63 | 0.62 | ○ | 450 |

(continued)

| Example | Catalyst addition amount (mol%) | Phosphorus compound type | Catalyst preparation example No. | Polymerization time | IV (dl/g) | Transparency of hollow molded article | Al containing insoluble particles Al (ppm) |
|---|---|---|---|---|---|---|---|
| Example A-7 | Al/P=0.021/0.042 | Formula 39 | 1 | 62 | 0.60 | ○ | 2700 |
| Example A-8 | Al/P=0.014/0.028 | Formula 39 | 3 | 69 | 0.62 | ○ | 570 |
| Example A-9 | Al/P=0.014/0.028 | Formula 39 | 4 | 77 | 0.62 | ○ | 1100 |
| Comparative Example A-1 | Al/P=0.014/0.028 | Formula 39 | - | 76 | 0.61 | ○ | 3800 |
| Comparative Example A-2 | Sb=0.04 | - | - | 67 | 0.60 | Δ | - |
| *) Preparation Example No. of mixed solution of aluminum compound solution and phosphorus compound solution | | | | | | | |

(Examples B-1, B-2, B-3, B-6, B-7 and B-8 and Reference Examples B-1 and B-2)

(1) Preparation of polycondensation catalyst solution

(Preparation of ethylene glycol solution of phosphorus compound)

After 2.0 L of ethylene glycol was added to a flask equipped with nitrogen introduction tube and condenser at room temperature and atmospheric pressure, stirring at 200 rpm in nitrogen atmosphere, 200 g of phosphorus compound (Formula 39) was added. Further, 2.0 L of ethylene glycol was additionally added, the setting temperature of the jacket was changed to be 196˚C for heating and the mixture was stirred under refluxing for 60 minutes from moment the inner temperature exceed 185˚C. After that the heating was stopped and immediately the solution was parted from the heat source and under keeping nitrogen atmosphere, the solution was cooled to 120˚C in 30 minutes. The molar ratio of Irganox 1222 in the obtained solution was 40% and the molar ratio of the compound with changed structure derived from Irganox 1222 was 60%.

(Preparation of aqueous solution of aluminum compound)

After 5.0 L of pure water was added to flask equipped with condenser at room temperature and atmospheric pressure, stirring at 200 rpm, 200 g of basic aluminum acetate was added in form of slurry of pure water. Further, pure water was added to adjust the total in 10.0 L and the solution was stirred at room temperature and atmospheric pressure for 12 hours. After that, the setting temperature of the jacket was changed to be 100.5˚C for heating and the mixture was stirred under refluxing for 3 hours from the moment the inner temperature exceed 95˚C. After that the stirring was stopped and immediately the solution was cooled to room temperature to obtain aqueous solution.

(Preparation of ethylene glycol solution of aluminum lactate)

67 g/l of aqueous solution was prepared at room temperature using aluminum lactate. Ethylene glycol was added to the aqueous solution of obtained aluminum lactate and water was distilled by heating at about 100˚C to obtain ethylene glycol solution of about 29 g/l.

(Preparation of water/ethylene glycol mixed solution of aluminum compound)

Ethylene glycol was added in amount as to adjust the aqueous solution/ethylene glycol = 2/3 (by volume) to the aqueous solution of the aluminum compound and sufficiently mixed to obtain water/ethylene glycol mixed solution of aluminum compound.

(Polycondensation of polyester)

The water/ethylene glycol mixed solution of basic aluminum acetate produced by the above-mentioned method as polycondensation catalyst and the ethylene glycol solution of the phosphorus compound were respectively supplied via separate supply ports to the mixture of bis(2-hydroxyethyl)terephthalate and oligomer produced by conventional method from the high purity terephthalate and ethylene glycol in 2 time as much by mole while the ratios of aluminum atom and phosphorus atom were adjusted to be 0.021% by mole and 0.028% by mole, respectively, to the acid component in the polyester and the mixture was stirred at 245˚C and atmospheric pressure for 15 minutes in nitrogen atmosphere. Next, the mixture was gradually heated to 275˚C in 55 minutes and the pressure of the reaction system was gradually decreased to 66.5 Pa (0.5 Torr) and further polycondensation reaction was carried out at 275˚C and 66.5 Pa for 130 minutes. The properties of the obtained PET are shown in Table 2.

(Examples B-4, B-5, B-9, and B-10 and Reference Examples B-3 and B-4)

(Aqueous solution of aluminum compound)

After 5.0 L of pure water was added to a flask equipped with a cooling tube at room temperature and atmospheric pressure, stirring at 200 rpm, 200 g of basic aluminum acetate whose water-insoluble matter evaluated by the above-mentioned evaluation method was 2600 ppm was added in form of slurry of pure water. Further, pure water was added to adjust the total in 10.0 L and the solution was stirred at room temperature and atmospheric pressure for 12 hours. After that, the setting temperature of the jacket was changed to be 100.5˚C for heating and the mixture was stirred under refluxing for 3 hours from the moment the inner temperature exceed 95˚C. After that the stirring was stopped and the solution was cooled to room temperature. The water/ethylene glycol mixed solution of the aluminum compound was produced in the same manner as Example B-1.

(Esterification reaction and polycondensation)

2 L stainless steel autoclave equipped with stirrer was charged with high purity BHET obtained by chemical recovery from PET bottles and high purity terephthalic acid to carry out esterification reaction. The esterification reaction was carried out at 255˚C.
The loading ratio of the high purity BHET and the high purity terephthalic acid was adjusted to obtain polyester oligomer. To the oligomer, the ethylene glycol solution of the aluminum compound produced by the above-mentioned method was added in amount of 0.021% by mole on the basis of aluminum atom to the amount of the acid component in the polyester oligomer and then high purity BHET or high purity terephthalic acid was additionally added so as to adjust the acid value AVo of the finally produced oligomer to be 300 to 950 eq/ton and OHV% of the oligomer to the total terminal groups to be 65 $\pm$ 5% and again the esterification reaction was carried out at 255˚C. The ethylene glycol solution of the phosphorus compound prepared in Example 1 was added in amount of 0.028% by mole on the basis of phosphorus atom to the acid component of the polyester oligomer to the obtained esterification reaction product and stirred for 10 minutes at the same temperature. Next, the temperature of the polycondensation system was gradually increased to 280˚C and the pressure was gradually decreased to 13.3 Pa (0.1 Torr), to carry out polycondensation and obtain polyethylene terephthalate. The acid value AVo, hydroxyl value OHVo of the polyester oligomer at the time of aluminum compound addition and the physical properties of the polyethylene terephthalate are shown in Table 2.

## Table 2

| | Example B-1 | Example B-2 | Reference Example B-1 | Example B-3 | Reference Example B-2 | Example B-4 | Example B-5 | Reference Example B-3 | Reference Example B-4 |
|---|---|---|---|---|---|---|---|---|---|
| Al compound | Basic Al acetate | Basic Al acetate | Basic Al acetate | Al lactate | Al lactate | Basic Al acetate | Basic Al acetate | Basic Al acetate | Basic Al acetate |
| Water-insoluble matter of aluminum compound | 600 | 150 | 3000 | 1010 | 1700 | 2600 | 2600 | 2600 | 2600 |
| Property of oligomer at the time of adding aluminum compound: $AV_0$ | *1 | *1 | *1 | *1 | *1 | 3250 | 4050 | 834 | 743 |
| Property of oligomer at the time of adding aluminum compound: $OHV_0$ | *2 | *2 | *2 | *2 | *2 | 1480 | 1250 | 1038 | 1192 |
| IV(dl/g) | 0.58 | 0.60 | 0.57 | 0.61 | 0.61 | 0.60 | 0.59 | 0.59 | 0.60 |
| Color tone (L value) | 65.1 | 65.2 | 64.5 | 66.0 | 66.0 | 57.0 | 56.8 | 57.4 | 57.1 |
| Color tone (b value) | 3.3 | 3.4 | 3.5 | 3.8 | 3.9 | 0.1 | 0.1 | 0.0 | 0.02 |
| Al containing insoluble particles in polyester(ppm) | 610 | 350 | 6800 | 1300 | 5800 | 650 | 600 | 4100 | 6020 |
| Haze value of monoaxially oriented film (%) | 0.8 | 0.6 | 3.5 | 1.1 | 3.0 | 0.8 | 0.7 | 2.3 | 3.1 |

| | Example B-6 | Example B-7 | Example B-8 | Example B-9 | Example B-10 |
|---|---|---|---|---|---|
| Al compound | Basic Al acetate | Basic Al acetate | Al lactate | Basic Al acetate | Basic Al acetate |
| Water-insoluble matter of aluminum compound | 550 | 160 | 1100 | 2600 | 2600 |
| Property of oligomer at the time of adding aluminum compound: $AV_0$ | *1 | *1 | *1 | 3300 | 4020 |
| Property of oligomer at the time of adding aluminum compound: $OHV_0$ | *2 | *2 | *2 | 1520 | 1240 |
| IV(dl/g) | 0.59 | 0.61 | 0.60 | 0.61 | 0.59 |
| Color tone (L value) | 55.0 | 55.3 | 56.0 | 57.0 | 56.5 |
| Color tone (b value) | 0.2 | 0.3 | 0.6 | 0.1 | 0.1 |
| Al containing insoluble particles in polyester(ppm) | 790 | 400 | 1400 | 600 | 550 |
| Haze value of monoaxially oriented film (%) | 0.8 | 0.5 | 1.2 | 0.8 | 0.7 |

***1: supposed to be 200 to 300, however not measured.**
***2: supposed to be 6000 to 8000, however not measured.**

(Example C-1)

(1) Preparation of polycondensation catalyst solution

(Preparation of ethylene glycol solution of phosphorus compound and preparation of aqueous solution of aluminum compound)

Preparation was carried out in the same manner as Example B-1

(Preparation of ethylene glycol mixed solution of aluminum compound)

Ethylene glycol in the same volume was added to the aqueous aluminum compound solution obtained in the above-mentioned manner and stirred at room temperature for 30 minutes and then the inner temperature was controlled to be 80 to 90°C and the pressure was gradually decreased to 27 hPa and the mixture was stirred for a few hours while distilling water out from the system to obtain ethylene glycol solution of 20g/L aluminum compound. The NMR spectrum of the obtained solution is shown in Fig. 1. The peak integration value ratio of $^{27}$Al-NMR spectrum of the obtained aluminum solution was 2.2.

(2) Esterification reaction and polycondensation reaction

Slurry obtained by mixing 1 part by weight of high purity terephthalate and 0.45 part by weight of ethylene glycol was continuously supplied to continuous polyester production apparatus comprising two continuous esterification reaction tanks, three polycondensation reaction tanks, equipped with in-line mixer having high speed stirrer in the transportation line from the second esterification reaction tank to the first polycondensation reaction tank. The first and the second esterification reaction tanks were adjusted as the reaction temperature to be 250°C and pressure to be 0.1

MPa for the first esterification reaction tank, and the reaction temperature to be 250˚C and pressure to be 0.1 MPa for the second esterification reaction tank and the reaction time was adjusted and ethylene glycol was loaded to the second esterification reaction tank to obtain polyester oligomer. The AVo and OHVo of the oligomer at the first esterification reaction tank outlet were 1600 eq/ton and 1400 eq/ton, respectively. The AVo and OHVo of the oligomer at the second esterification reaction tank outlet were 650 eq/ton and 1520 eq/ton, respectively and OHV% was 70% by mole. The oligomer was continuously transported to the continuous polycondensation reaction apparatus comprising three reaction tanks and at the same time, the ethylene glycol solution of the aluminum compound and the ethylene glycol solution of phosphorus compound produced by the above-mentioned method were continuously added in amounts of aluminum atom and phosphorus atom adjusted to be 0.015% by mole and 0.036% by mole, respectively, to the acid component in the polyester to the in-line mixer installed in the transportation line while being stirred by a stirring type mixer (preliminary mixing) and PET with IV of 0.62 was obtained by polycondensation reaction at 265˚C and 0.009 MPa in the initial stage polycondensation reactor, at 265 to 275˚C and 0.0007 MPa in the middle stage polycondensation reactor, and at 270 to 280˚C and 0.0000133 MPa in the final stage polycondensation reactor. The characteristic values of the obtained PET are shown in Table 3. In the NMR spectrum of the mixed solution of the aluminum compound solution and the phosphorus compound solution at the outlet of the above-mentioned stirring mixer, broad peak (referred to as coordination peak) in a range of 5 to 24 ppm appeared, which did not appear in the spectrum of the ethylene glycol solution of the phosphorus compound before it was mixed with the ethylene glycol solution of the aluminum compound. The integration value of the coordination peak was 45% of the integration value of the NMR spectrum peak of the phosphorus atom bonded with hydroxyl group which was observed near the range of 25 to 27 ppm existing in the NMR spectrum of the ethylene glycol solution of the phosphorus compound before it was mixed with the ethylene glycol solution of the aluminum compound.

(Examples C-2 and C-4 and Reference Examples C-1 and C-2)

The process was carried out in the same manner as Example C-1, except the conditions were changed as described in Table 3. The NMR spectrum of the ethylene glycol mixed solution of the aluminum compound of Reference Example C-1 is as shown in Fig. 2 and the integration ratio was 0.19. The NMR spectrum of the mixed solution of the aluminum compound solution and the phosphorus compound solution at the outlet of the above-mentioned stirring mixer in Reference Example C-1 is as shown in Fig. 4 and the coordination peak was scarcely observed.

(Example C-3)

(Preparation of polycondensation catalyst solution)

The polycondensation catalyst solution was obtained by mixing the ethylene glycol solution of the aluminum compound and the ethylene glycol solution of the phosphorus compound prepared by the method of Example 1 at quantitative ratio of aluminum atom and phosphorus atom adjusted to 1 : 2.40 and stirred for 30 minutes at room temperature. The NMR spectra of the above-mentioned ethylene glycol solution of the phosphorus compound and the polycondensation catalyst solution were measured. In the NMR spectrum of the polycondensation catalyst solution, broad peak (referred to as coordination peak) in a range of 5 to 24 ppm appeared. The peak did not appear in the spectrum of the ethylene glycol solution of the phosphorus compound before it was mixed with the ethylene glycol solution of the aluminum compound. The spectrum is shown in Fig. 3. The integration value of the coordination peak was 50% of the integration value of the NMR spectrum peak of the phosphorus atom bonded with hydroxyl group which was observed near the range of 25 to 27 ppm in the NMR spectrum of the ethylene glycol solution of the phosphorus compound before it was mixed with the ethylene glycol solution of the aluminum compound. The obtained mixed solution was stored at the atmosphere of 20 to 30˚C.

(Polycondensation of polyester)

PET of Example 3 was obtained in the same method of Example 1, except that the polycondensation catalyst solution prepared in the above-mentioned manner and stored for about 1 month was continuously supplied to the in-line mixer by the same method as that in Example C-1. The properties of the obtained PET are shown in Table 3.
PETs obtained in Example C-1 to C-3 and Comparative Examples C-1 to C-3 were subjected to solid-phase polycondensation to adjust IV to be 0.75 dl/g and dried by a drier using dehumidified air and preforms were molded by M-150C (DM)(manufactured by Kakuki Seisakusho) extrusion molding apparatus at resin temperature of 295˚C. After the mouth plug part of each preform was thermally crystallized for 90 seconds by mouth plug part crystallization apparatus manufactured by our company, the preform was biaxially blow-molded by LB-O1E drawing blow molding apparatus manufactured by Corpo Plast and successively thermally fixed in die set at about 150˚C for about 7 seconds to obtain hollow molded article with 2000 cc capacity (the trunk part was circular). Each obtained hollow molded article was filled with

hot water at 90˚C and capped by capping apparatus and then the container was turned back and left to investigate the leakage of the content. Also, the deformation state of the mouth plug part after the capping was investigated. Further, specimen was sampled from the ceiling face of the mouth plug part of the preform and the density was measured and the density of the mouth plug part of the preform by infrared heating was evaluated. The density was measured at 30˚C according to a density inclination line of a density deviation calcium nitrate/water mixed solution. Measurement of haze value of each hollow molded article was carried out by haze meter, NDH 2000 model manufactured by Nippon Denshoku Co., Ltd. using cut-sample of trunk part of the hollow molded article (thickness about 0.45 mm). The evaluation results are shown in Table 3.

**Table 3**

| | Example C-1 | Example C-2 | Example C-3 | Reference Example C-1 | Reference Example C-2 | Reference Example C-4 |
|---|---|---|---|---|---|---|
| Preparation conditions of ethylene glycol solution of aluminum compound | Reduced pressure 80-90˚C | Reduced pressure 95-105˚C | Reduced pressure 80-90˚C | Atmospheric pressure 140-160˚C | Reduced pressure 80-90˚C | Reduced pressure 95-105˚C |
| Conduction of mixing at the time of adding catalyst | Preliminary mixing immediately before addition | Preliminary mixing immediately before addition | Preliminary mixing and one-month storage at 20 to 35˚C | Preliminary mixing immediately before addition | Separate addition, no preliminary mixing | Preliminary mixing immediately before addition |
| Catalyst addition point | In-line mixer | In-line mixer | In-line mixer | Second esterification reactor | In-line mixer | Second esterification reactor |
| $^{27}$A-NMR (intensity ratio) | 2.2 | 0.85 | 2.2 | 0.18 | 2.2 | 0.85 |
| $^{31}$P-NMR (%) | 45 | 22 | 50 | <1 | 45 | 22 |
| IV(dl/g) | 0.62 | 0.62 | 0.62 | 0.62 | 0.62 | 0.62 |
| Color tone (L value) | 57.4 | 56.1 | 57 | 56.9 | 57.1 | 57.5 |
| Color tone (b value) | 0.3 | 0.2 | 0.1 | 0 | 0.2 | 0.2 |
| Tc1(˚C) | 166 | 167 | 137 | 140 | 167 | 140 |
| Al containing insoluble particles in polyester (ppm) | 420 | 1350 | 400 | 5500 | 4500 | 1100 |
| Haze value of monoaxially oriented film (%) | 0.7 | 1.1 | 0.7 | 3 | 2.5 | 2.1 |
| Density of plug part (g/cm$^2$) | 1.378 | 1.378 | 1.377 | 1.397 | 1.379 | 1.398 |

(continued)

| | Example C-1 | Example C-2 | Example C-3 | Reference Example C-1 | Reference Example C-2 | Reference Example C-4 |
|---|---|---|---|---|---|---|
| Plug deformation | None | None | None | Appearing | None | Appearing |
| Leakage of content | None | None | None | Appearing | None | Appearing |
| Haze (%) | 0.6 | 1.3 | 0.6 | 4.5 | 4.2 | 3.2 |

(Example D-1)

(1) Preparation of polycondensation catalyst solution

(Preparation of ethylene glycol solution of phosphorus compound and aqueous solution of aluminum compound)

Preparation was carried out in the same manner as Example B-1.

(Preparation of ethylene glycol solution of aluminum compound)

Ethylene glycol in the same volume was added to the aqueous aluminum compound solution obtained in the above-mentioned manner and stirred at room temperature for 30 minutes and then the inner temperature was controlled to be 95 to 105˚C and the pressure was gradually decreased to 27 hPa and the mixture was stirred for a few hours while distilling water from the system to obtain an ethylene glycol solution of 20g/L aluminum compound. The peak integration value ratio of $^{27}$Al-NMR spectrum of the obtained aluminum solution was 0.85.

(Preparation of polycondensation catalyst solution)

Preparation was carried out in the same manner as Example C-3.

(Preparation of solution of magnesium compound and sodium compound)

Magnesium acetate tetrahydrate and sodium acetate were dissolved in concentrations of 50 g/l and 10 g/l, respectively, in ethylene glycol and solubilized.

(2) Esterification reaction and polycondensation reaction

A slurry obtained by mixing 1 part by weight of high purity terephthalate and 0.4 part by weight of ethylene glycol was continuously supplied to a continuous polyester production apparatus comprising two continuous esterification reaction tanks and three polycondensation reaction tanks and the first and the second esterification reaction tanks were adjusted as the reaction temperature to be 250˚C and pressure to be 0.1 MPa for the first esterification reaction tank and the reaction temperature to be 255˚C and pressure to be 0.1 MPa for the second esterification reactor to carry out reaction and obtain a low molecular weight condensation product. The low molecular weight condensation product was continuously transported to the continuous polycondensation reaction apparatus comprising three reaction tanks and PET with IV of 0.61 was obtained by polycondensation reaction at 265˚C and 0.009 MPa in the initial stage polycondensation reactor, at 270˚C and 0.0007 MPa in the middle stage polycondensation reactor, and at 272˚C and 0.0000133 MPa in the final stage polycondensation reactor. The mixed solution of the aluminum compound and the phosphorus compound, the magnesium compound solution, and the sodium compound solution produced in the above-mentioned methods were added in respectively amount as to leave the respective amounts in PET as shown in Table 4 to the second esterification reactor. The evaluation results of the obtained PET are shown in Table 4. PET obtained in this Example was found having low melt specific resistance, excellent in electrostatic adhesion, containing little insoluble particles in polyester, and giving monoaxially oriented film with low haze. Further, the content of DEG was low and color tone was excellent. Accordingly, the PET had high quality applicable as starting material for film and sheet production. The results are shown in Table 4.

(Examples D-2 to D-8)

The same process was carried out as Example D-1, except that the supply amounts of the respective compounds were changed as to adjust the amounts of the respective elements in PET as shown in Table 4.

(Example D-9)

The same process was carried out as Example D-1, except that in-line mixer equipped with high speed stirrer was installed in transportation line from the second esterification reaction tank to first polycondensation reactor and the supply position of the mixed solution of the ethylene glycol solution of the aluminum compound and the ethylene glycol solution of the phosphorus compound was changed to the above-mentioned in-line mixer.

(Reference Example D-1)

The same process was carried out as Example D-1, except that preparation of the ethylene glycol solution of the aluminum compound was carried out at liquid temperature of 150 to 170˚C and atmospheric pressure by distillation of water. The obtained PET was not only inferior in the respective properties but also the polycondensation time was prolonged about 1.5 times of that in Example 1. The results are shown in Table 5.

(Reference Example D-2)

The same process was carried out as Example D-1, except that the ethylene glycol solution of the aluminum compound and the ethylene glycol solution of the phosphorus compound were separately and continuously supplied to the second esterification reactor via separate supply ports independently without mixing. The results are shown in Table 5.

(Reference Examples D-3 to D-6)

The same process was carried out as Example 1, except that the supply amounts of the respective compounds were changed as to adjust the amounts of the respective aluminum element, magnesium element, sodium element, and phosphorus element in PET as shown in Table 5. The results are shown in Table 5.

**Table 4**

| | Example D-1 | Example D-2 | Example D-3 | Example D-4 | Example D-5 | Example D-6 | Example D-7 | Example D-8 | Example D-9 |
|---|---|---|---|---|---|---|---|---|---|
| $^{27}$A-NMR (intensity ratio) | 0.85 | 0.85 | 0.85 | 0.85 | 0.85 | 0.85 | 0.85 | 0.85 | 0.85 |
| $^{31}$P-NMR(%) | 50 | 50 | 50 | 50 | 50 | 50 | 50 | 50 | 50 |
| Al element amount (ppm) | 30 | 30 | 30 | 30 | 30 | 21 | 21 | 21 | 30 |
| P(ppm). | 70 | 47 | 70 | 70 | 70 | 49 | 60 | 60 | 70 |
| Mg(ppm) | 60 | 60 | 20 | 35 | 100 | 60 | 60 | 60 | 60 |
| Na(ppm) | 10 | 10 | 10 | 10 | 10 | 10 | 5 | 20 | 10 |
| P/(Al + Mg) (atomic ratio) | 0.6 | 0.4 | 1.2 | 0.9 | 0.4 | 0.5 | 0.6 | 0.6 | 0.6 |
| IV(dl/g) | 0.61 | 0.61 | 0.61 | 0.61 | 0.61 | 0.61 | 0.61 | 0.61 | 0.61 |
| Color tone (L value) | 57.0 | 57.5 | 58.0 | 57.3 | 57.5 | 57.3 | 58.0 | 57.0 | 57.5 |
| Color tone (b value) | 1.3 | 1.2 | 1.1 | 1.1 | 1.2 | 1.2 | 1.1 | 1.3 | 1.1 |
| ρi ($1.0\times10^{8}\Omega\cdot$ cm) | 0.28 | 0.26 | 0.80 | 0.36 | 0.15 | 0.21 | 0.28 | 0.20 | 0.25 |
| Electrostatic adhesion property | Good | Good | Good | Good | Good | Good | Good | Good | Good |
| DEG(mol%) | 1.9 | 1.9 | 1.9 | 1.8 | 1.8 | 1.8 | 2.3 | 1.9 | 1.8 |
| Al containing insoluble particles in polyester (ppm) | 450 | 1300 | 400 | 1100 | 450 | 450 | 450 | 450 | 450 |
| Haze value of monoaxially oriented film (%) | 0.3 | 0.6 | 0.3 | 0.6 | 0.3 | 0.3 | 0.3 | 0.3 | 0.3 |

**Table 5**

| | Reference Example D-1 | Reference Example D-2 | Reference Example D-3 | Reference Example D-4 | Reference Example D-5 | Reference Example D-6 |
|---|---|---|---|---|---|---|
| $^{27}$A-NMR (intensity ratio) | 0.18 | 0.85 | 0.85 | 0.85 | 0.85 | 0.85 |
| $^{31}$P-NMR(%) | <1 | - | 50 | 50 | 50 | 50 |
| Al element amount (ppm) | 30 | 30 | 30 | 30 | 30 | 30 |
| P(ppm) | 70 | 70 | 70 | 70 | 5 | 206 |
| Mg(ppm) | 60 | 60 | <1 | 60 | 60 | 60 |
| Na(ppm) | 10 | 10 | 10 | <1 | 10 | 10 |
| P/(Al + Mg) (atomic ratio) | 0.6 | 0.6 | 1.1 | 0.6 | 0.05 | 1.9 |
| IV(dl/g) | 0.61 | 0.61 | 0.61 | 0.61 | 0.61 | 0.61 |
| Color tone (L value) | 57.3 | 57.0 | 57.5 | 57.3 | 56.5 | 57.5 |
| Color tone (b value) | 1.8 | 1.3 | 0.8 | 1.0 | 4.0 | 0.6 |
| ρi (1.0×108Ω·cm) | 0.27 | 0.27 | 5.00 | 1.10 | 0.50 | 2.30 |
| Electrostatic adhesion property | Good | Good | Poor | Poor | Good | Poor |
| DEG(mol%) | 2 | 2 | 1.8 | 3.5 | 1.9 | 2.1 |
| Al containing insoluble particles in polyester (ppm) | 6000 | 3200 | 850 | 480 | 8000 | <70 |
| Haze value of monoaxially oriented film (%) | 3.3 | 1.7 | 0.8 | 0.3 | 3.8 | 0.3 |

The present inventions provide a polyester excellent in the color tone, thermal stability, and transparency, and exhibiting its characteristic in fields of molded articles, particularly ultrafine fibers, highly transparent films for optical use, or molded bodies with ultra high transparency by not containing defective antimony compound, germanium compound, and titanium compound as catalyst main components, and using an aluminum compound as a catalytic metal component. The present inventions also provide a polyester polymerization catalyst having excellent catalytic activity for providing such a polyester and process for producing the polyester by using the catalyst.

## Claims

1. A polyester produced in the presence of a polycondensation catalyst containing at least one compound selected from a group consisting of aluminum compounds and at least one compound selected from a group consisting of phosphorus compounds, wherein aluminum containing insoluble particles therein is 3500 ppm or lower.

2. A polyester produced in the presence of a polycondensation catalyst containing at least one compound selected from a group consisting of aluminum compounds and at least one compound selected from a group consisting of phosphorus compounds, wherein haze value of monoaxially oriented film of the polyester is 2% or lower.

**3.** The polyester according to claim 1, wherein haze value of monoaxially oriented film of it is 2% or lower.

**4.** The polyester according to any one of claims 1 to 3, wherein the polyester is polyethylene terephthalate.

**5.** The polyester according to any one of claims 1 to 4, wherein the polyester has crystallization temperature of 150˚C or higher at the time of heating.

**6.** A polyester containing at least aluminum element, an alkaline earth metal element, an alkali metal element, and phosphorus element and **characterized** as follows;

(1) $3 \leq Al \leq 200$ wherein Al denotes aluminum element content (ppm) in the polyester,
(2) $0.5 \leq A \leq 50$ wherein A denotes alkali metal element content (ppm) in the polyester,
(3) $3 \leq AA \leq 200$ wherein AA denotes alkaline earth metal element content (ppm) in the polyester, and
(4) 0.1 ≤ (phosphorus element)/(aluminum element + alkaline earth metal element) (atomic ratio) ≤ 2.0 wherein phosphorus element, aluminum element, and alkaline earth metal element denote their contents in the polyester.

**7.** The polyester according to any one of claims 1 to 5, wherein the polyester contains at least aluminum element, an alkaline earth metal element, an alkali metal element, and phosphorus element and is **characterized** as follows;

(1) $3 \leq Al \leq 200$ wherein Al denotes aluminum element content (ppm) in the polyester,
(2) $0.5 \leq A \leq 50$ wherein A denotes alkali metal element content (ppm) in the polyester,
(3) $3 \leq AA \leq 200$ wherein AA denotes alkaline earth metal element content (ppm) in the polyester, and
(4) 0.1 ≤ (phosphorus element)/(aluminum element + alkaline earth metal element) (atomic ratio) ≤ 2.0 wherein phosphorus element, aluminum element, and alkaline earth metal element denote their contents in the polyester.

**8.** A polyester polymerization catalyst containing an aluminum compound and a phosphorus compound and obtained by mixing the aluminum compound and the phosphorus compound in a solvent.

**9.** A polyester polymerization catalyst comprising solution containing an aluminum compound and a phosphorus compound, wherein the solution has a peak of phosphorus at chemically shifted position as compared with solution containing the phosphorus compound alone in measurement of $^{31}$P-NMR spectrum.

**10.** The polyester polymerization catalyst according to claim 8 or 9, wherein the chemical shift of the peak position is shift to the high magnetic field side and the peak is broadened.

**11.** The polyester polymerization catalyst according to any one of claims 8 to 10, wherein the integrated value of the peaks of NMR spectrum of phosphorus atom bonded with hydroxyl group is 10% or higher to the integrated value of NMR spectrum of phosphorus atom bonded with hydroxyl group in the solution containing the phosphorus compound alone before the solution is mixed with the solution of the aluminum compound.

**12.** A polyester polymerization catalyst comprising solution containing an aluminum compound, wherein the aluminum compound has a peak of aluminum at chemically shifted position as compared with solution containing the aluminum compound alone in measurement of $^{27}$Al-NMR spectrum.

**13.** The polyester polymerization catalyst according to any one of claims 8 to 12 comprising solution containing the aluminum compound, wherein ratio of integrated value of the peaks appearing in a range of -15 to 30 ppm in $^{27}$Al-NMR spectrum to the integrated value of standard peaks is 0.3 or higher.

**14.** The polyester polymerization catalyst according to any one of claims 8 to 13, wherein the solvent is at least one selected from a group consisting of water and alkylene glycols.

**15.** The polyester polymerization catalyst according to any one of claims 8 to 14, wherein the catalyst is produced by mixing under previous formation of solution or slurry of at least one of the aluminum compound and the phosphorus compound.

**16.** The polyester polymerization catalyst according to any one of claims 8 to 15, wherein at least one of the aluminum compound and the phosphorus compound previously heated in a solvent is used.

**17.** The polyester polymerization catalyst according to any one of claims 8 to 16, wherein the solution or slurry containing the aluminum compound and the phosphorus compound is treated by heating.

**18.** The polyester polymerization catalyst according to any one of claims 8 to 17, wherein the aluminum compound include at least one compound selected from aluminum acetate, basic aluminum acetate, aluminum lactate, aluminum chloride, aluminum hydroxide, aluminum hydroxide chloride, and aluminum acetylacetonate.

**19.** The polyester polymerization catalyst according to any one of claims 8 to 11 and claims 13 to 18, wherein the phosphorus compound include at least one compound selected from phosphonic acid compounds, phosphinic acid compounds, phosphine oxide compounds, phosphonous acid compounds, phosphinous acid compounds, and phosphine compounds.

**20.** A process of producing a polyester using the polymerization catalyst described in any one of claims 8 to 19.

**21.** A process of producing a polyester by using the polymerization catalyst described in any one of claims 8 to 19, wherein the addition timing of the polymerization catalyst is during time from transesterification reaction or direct esterification reaction to polycondensation reaction.

**22.** A polyester produced by using the polymerization catalyst described in any one of claims 8 to 19.

**23.** A polyester produced by the polymerization process described in claim 21.

## INTERNATIONAL SEARCH REPORT

International application No.
PCT/JP2005/001795

A. CLASSIFICATION OF SUBJECT MATTER
Int.Cl[7] C08G63/87

According to International Patent Classification (IPC) or to both national classification and IPC

B. FIELDS SEARCHED

Minimum documentation searched (classification system followed by classification symbols)
Int.Cl[7] C08G63/00-63/91

Documentation searched other than minimum documentation to the extent that such documents are included in the fields searched

| | | | |
|---|---|---|---|
| Jitsuyo Shinan Koho | 1926-2005 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | EP 1227117 A1 (TOYO BOSEKI KABUSHIKI KAISHA), 31 July, 2002 (31.07.02), Claims 1, 2, 7 to 9; Par. Nos. [0013], [0030], [0031], [0050], [0056] & JP 2001-131276 A Claims 1, 2, 7 to 9; Par. Nos. [0038], [0039], [0058], [0065] | 1-8,14-23<br>9-13 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>24 February, 2005 (24.02.05) | Date of mailing of the international search report<br>15 March, 2005 (15.03.05) |
| Name and mailing address of the ISA/<br>Japanese Patent Office<br>Facsimile No. | Authorized officer<br>Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 46040711 B
- JP 2001131276 A
- JP 2001163963 A
- JP 2001163964 A
- JP 2002220446 A
- JP 2001354759 A
- JP H08299771 A